Europäisches Patentamt

European Patent Office

Office européen des brevets

(19)

(11) **EP 0 850 688 B1**

(12) **FASCICULE DE BREVET EUROPEEN**

(45) Date de publication et mention
de la délivrance du brevet:
**05.12.2001 Bulletin 2001/49**

(51) Int Cl.⁷: **B01J 27/047**, B01J 27/04

(21) Numéro de dépôt: **97403070.2**

(22) Date de dépôt: **17.12.1997**

(54) **Catalyseur d'hydroraffinage et d'hydrocraquage comprenant un sulfure mixte comprenant du soufre, au moins un élément du groupe VB et au moins un élément du groupe VIB**

Wasserstoffbehandlung und Hydrocrackkatalysator enthaltend ein Mischsulfid mit Schwefel, zumindest ein Element der Gruppe 5B und zumindest ein Element der Gruppe 6B

Hydrorefining and hydrocracking catalyst comprising a bulk sulfide containing sulfur, at least one element of group 5B and at least one element of group 6B

(84) Etats contractants désignés:
**DE ES FR GB IT NL**

(30) Priorité: **27.12.1996 FR 9616091**
**03.03.1997 FR 9702595**

(43) Date de publication de la demande:
**01.07.1998 Bulletin 1998/27**

(73) Titulaire: **INSTITUT FRANCAIS DU PETROLE**
**92500 Rueil Malmaison (FR)**

(72) Inventeurs:
 • **Danot, Michel**
  **44300 Nantes (FR)**

 • **Allali, Nabil**
  **Meknes (MA)**
 • **Gaborit, Valérie**
  **44260 Savenay (FR)**
 • **Geantet, Christophe**
  **01700 Miribel (FR)**
 • **Afanassiev, Pave**
  **69150 Decines (FR)**
 • **Mignard, Samuel**
  **78400 Chatou (FR)**
 • **Kasztelan, Slavik**
  **92500 Rueil Malmaison (FR)**

(56) Documents cités:
 EP-A- 0 181 082    EP-A- 0 216 472
 WO-A-90/05587     GB-A- 2 036 582

EP 0 850 688 B1

**Description**

La présente invention concerne un catalyseur d'hydroraffinage et/ou d'hydrocraquage de charges hydrocarbonées, ledit catalyseur comprenant au moins un sulfure mixte comprenant du soufre, au moins un élément du groupe VB de la classification périodique des éléments (Handbook of Chemistry and Physics, 76ème édition, 1995-1996, intérieur 1ère page de couverture) (groupe 5 selon la nouvelle notation de la table périodique des éléments), de préférence le niobium, et au moins un élément du groupe VIB de ladite classification (groupe 6), de préférence le molybdène et le tungstène, de façon encore plus préférée le molybdène, éventuellement associé à un support et/ou à au moins un métal du groupe VIB de ladite classification (groupe 6) et/ou au moins un métal du groupe VIII de ladite classification (groupes 8, 9 et 10) et éventuellement au moins un élément pris parmi P, B et Si et éventuellement au moins un élément du groupe VIIA de ladite classification (groupe 17), de préférence le fluor.

La présente invention concerne également les procédés de préparation du dit catalyseur, ainsi que son utilisation pour l'hydrotraitement de charges hydrocarbonées telles que les coupes pétrolières, les coupes issues du charbon comprenant les réactions comme l'hydrogénation, l'hydrodéazotation, l'hydrodéoxygénation, l'hydrodésulfuration, l'hydrocraquage de charges hydrocarbonées contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre.

L'hydrotraitement des charges hydrocarbonées telles que les coupes pétrolières soufrées prend une importance de plus en plus grande dans la pratique du raffinage avec la nécessité croissante de réduire la quantité de soufre dans les coupes pétrolières et de convertir des fractions lourdes en fractions plus légères valorisables en tant que carburants. Cet état de fait tient d'une part à l'intérêt économique de valoriser au mieux des bruts importés de plus en plus riches en fractions lourdes, pauvres en hydrogène et riches en hétéroatomes, dont l'azote et le soufre, et d'autre part aux spécifications imposées dans les divers pays pour les carburants commerciaux. Cette valorisation implique une réduction relativement importante du poids moléculaire des constituants lourds, qui peut être obtenue par exemple au moyen de réactions de craquage.

Les procédés actuels d'hydroraffinage catalytique utilisent des catalyseurs capables de promouvoir les principales réactions utiles à la mise en valeur des coupes lourdes, en particulier l'hydrogénation des noyaux aromatique (HAR), l'hydrodésulfuration (HDS), l'hydrodéazotation (HDN) et autres hydroéliminations. L'hydroraffinage est employé pour traiter des charges telles que les essences, les gazoles, les gazoles sous vide, les résidus atmosphériques ou sous vide, désasphaltés ou non. Par exemple, il est tout indiqué pour le prétraitement des charges des procédés de craquage et d'hydrocraquage catalytiques. Au moins une étape d'hydroraffinage est habituellement intégrée dans chacun des schémas connus de valorisation des coupes pétrolières lourdes. L'influence de cet hydrotraitement préalable sur le rendement global et la durée de vie du catalyseur de craquage et/ou d'hydrocraquage est d'autant plus important que l'on dispose de catalyseurs d'hydrotraitements plus actifs en hydrodéazotation, en hydrodésulfuration et en hydrogénation.

Le contexte de la présente invention, résumé ci-dessus, est bien connu de l'homme du métier. On trouvera par exemple une analyse détaillée de ce contexte dans Oil & Gas Journal, le 16 février 1987, pages 55 à 66, Van Kessel et al.

D'autre part, des sulfures simples d'éléments du groupe VB ou du groupe VIB ont pu être décrits en tant que constituants de catalyseurs d'hydroraffinage ou d'hydroconversion de charges hydrocarbonées, comme par exemple le trisulfure de niobium dans le brevet US-A-5.294.333. Or il est connu que les métaux du groupe VB, tel que le niobium, sont très difficiles à sulfurer et les méthodes de sulfuration conventionnelles ne conduisent généralement pas à la formation de sulfures mixtes mais seulement à des sulfures simples ou à des mélanges de sulfures simples. Ainsi seuls les mélanges de sulfures simples comprenant au moins un élément du groupe VB et un élément du groupe VIB ont pu être testés comme constituants de catalyseurs d'hydroraffinage ou d'hydroconversion de charges hydrocarbonées, comme par exemple dans le brevet US-A-4.910.181 ou le brevet US-A-5.275.994.

L'invention concerne donc un catalyseur d'hydroraffinage et/ou d'hydrocraquage de charges hydrocarbonées caractérisé en ce qu'il comprend au moins un sulfure mixte comprenant du soufre, au moins un élément du groupe VB de la Classification périodique des éléments, tels que le tantale, le niobium et le vanadium, de préférence le niobium, et au moins un élément du groupe VIB de ladite Classification, tels que le chrome, le molybdène et le tungstène, de préférence le molybdène ou le tungstène, de façon encore plus préférée le molybdène, éventuellement un élément du groupe VIII, éventuellement un support, de préférence une matrice généralement poreuse telle que l'alumine, éventuellement un élément choisi dans le groupe formé par P, B et Si, éventuellement un élément du groupe VIIA, et de préférence le fluor.

Ledit catalyseur présente une activité en hydrogénation des hydrocarbures aromatiques, en hydrodésulfuration, en hydrodéazotation et en hydrocraquage plus importante que celles des formules catalytiques connues de l'art antérieur à base de mélanges de sulfures simples. Sans vouloir être lié par une quelconque théorie, il semble que cette activité particulièrement élevée des catalyseurs de la présente invention est due aux propriétés particulières des sulfures mixtes comprenant du soufre, au moins un élément du groupe VB et au moins un élément du groupe VIB. La présence d'un tel sulfure mixte permet de plus une amélioration des propriétés hydrogénante, hydrodésulfurante, hydrodéazotante et craquante par rapport au sulfure de l'élément du groupe VIB et en particulier du sulfure de molybdène ou de tungstène utilisés habituellement pour les réactions d'hydroraffinage.

Le sulfure mixte présent dans le catalyseur de la présente invention est caractérisé par la formule générale approchée suivante :

$$A_xB_{1-x}S_y$$

où :

x est un nombre compris entre 0,001 et 0,999, de préférence entre 0,005 et 0,995, de manière plus préférée entre 0,05 et 0,95,

y est un nombre compris entre 0,1 et 8, et de préférence entre 0,1 et 6, et de façon encore plus préférée entre 0,5 et 4,

A est un élément du groupe VB, tel que le tantale, le niobium ou le vanadium, de préférence le niobium,

B est un élément choisi dans le groupe VIB, tel que le chrome, le molybdène ou le tungstène, de préférence le molybdène ou le tungstène, de façon encore plus préférée le molybdène.

Le catalyseur selon l'invention peut être sous forme supportée, il peut aussi être sous forme massique, c'est-à-dire qu'il ne comprend pas de support.

Un des catalyseurs selon la présente invention est sous forme massique et renferme généralement, en % poids par rapport à la masse totale du catalyseur :

- 0,01 à 100%, de préférence 0,05 à 100% et de manière encore plus préférée 0,1 à 100% d'au moins un sulfure mixte,

le catalyseur pouvant renfermer en outre :

- 0 à 99,99%, de préférence 0 à 99,95% et de manière encore plus préférée 0 à 99,9% d'au moins un métal du groupe VIII,
- 0 à 20%, de préférence 0 à 15% d'au moins un élément choisi dans le groupe formé par les éléments Si, P, et B, et
- 0 à 15%, de préférence 0 à 10% d'au moins un élément choisi dans le groupe VIIA, de préférence le fluor.

Le catalyseur supporté selon la présente invention renferme généralement en % poids par rapport à la masse totale du catalyseur :

- 0,5 à 99,9 % de préférence 1 à 99,0 % et de manière encore plus préférée 5 à 99 % d'au moins un support,
- 0,1 à 99,5 % de préférence 0,5 à 99 % et de manière encore plus préférée 1 à 90 % d'au moins une phase sulfure mixte,

le catalyseur pouvant renfermer en outre :

- 0 à 30 %, de préférence 0 à 25 % et de manière encore plus préférée 0 à 20 % d'au moins un métal du groupe VIII,
- 0 à 20 %, de préférence 0 à 15 % d'au moins un élément choisi dans le groupe formé par les éléments Si, P, et B, et
- 0 à 15 %, de préférence 0 à 10 % d'au moins un élément choisi dans le groupe VIIA, de préférence F.

Un catalyseur supporté préféré selon la présente invention renferme généralement, en % poids par rapport à la masse totale du catalyseur :

- 0,5 à 99,5%, de préférence 1 à 99% et de manière plus préférée 5 à 95%, et de manière encore plus préférée 10 à 90% d'au moins un support choisi de préférence dans le groupe formé par les matrices,
- 0,5 à 99,5%, de préférence 1 à 99% et de manière plus préférée 5 à 95%, et de manière encore plus préférée 10 à 90% d'au moins un sulfure mixte ,

le catalyseur pouvant renfermer en outre :

- 0 à 30%, de préférence 0 à 25% et de manière encore plus préférée 0 à 20% d'au moins un métal du groupe VIII,
- 0 à 20%, de préférence 0 à 15% d'au moins un élément choisi dans le groupe formé par les éléments Si, P, et B, et
- 0 à 15%, de préférence 0 à 10% d'au moins un élément choisi dans le groupe VIIA, de préférence F.

Un autre catalyseur préféré supporté selon la présente invention renferme généralement en % poids par rapport à la masse totale du catalyseur :

- 1 à 99,9 %, de préférence 5 à 99,5 % et de manière encore plus préférée 10 à 99 % d'au moins une matrice,
- 0,1 à 99 %, de préférence 0,5 à 95 % et de manière encore plus préférée 1 à 90 % d'au moins une phase sulfure mixte d'au moins un métal du groupe VB et d'au moins un métal du groupe VIB,

le catalyseur pouvant renfermer en outre :

- 0 à 30 %, de préférence 0 à 25 % et de manière encore plus préférée 0 à 20 % d'au moins un métal du groupe VIII,
- 0 à 20 %, de préférence 0 à 15 % d'au moins un élément choisi dans le groupe formé par les éléments Si, P et B, et
- 0 à 15 %, de préférence 0 à 10 % d'au moins un élément choisi dans le groupe VIIA, de préférence F.

L'identification du sulfure mixte se fait généralement à partir du diagramme de diffraction des rayons X. Elle peut se faire également à partir de la détermination de la distance métal-métal mesurée par la technique d'absorption des rayons X ou "Extended X-ray Absorption Fine Structure" (EXAFS). Par exemple, dans le cas d'un sulfure mixte de molybdène et de niobium, l'identification par la méthode EXAFS se fait par détermination des distances niobium-niobium ou niobium-molybdène si l'analyse EXAFS est réalisée au seuil K du niobium. Elle peut se faire également par la détermination des distances molybdène-molybdène et molybdène-niobium si l'analyse EXAFS est réalisée au seuil K du molybdène.

Le diagramme de diffraction X est obtenu à l'aide d'un diffractomètre INEL à multidétecteur courbe en utilisant la méthode classique des poudres avec le rayonnement monochromatique K alpha 1 du cuivre. A partir de la position des pics de diffraction représentée par l'angle 2 thêta, on calcule, par la relation de Bragg, les distances interéticulaires $d_{hkl}$ caractéristiques de l'échantillon et les paramètres de maille de la phase mixte a et c en Å (1 Å = 1 Angström = $10^{-10}$m). Le paramètre de maille « a » représente la distance moyenne métal-métal entre deux ions voisins et est caractéristique de l'existence d'une phase mixte. On peut également déterminer le type de structure par diffraction. Ainsi, par exemple, dans le cas d'un sulfure mixte de molybdène et de niobium, les sulfures simples de Mo et Nb, $MoS_2$ et $NbS_2$, existent tous les deux sous la forme de deux types de structure la forme hexagonale 2s et la forme rhomboédrique 3s. Pour les échantillons riches en molybdène (x < 0,5) la phase mixte tend à cristalliser dans le type de structure hexagonale 2s et les paramètres de maille varient linéairement en fonction de la proportion en niobium de la phase mixte comme le montre le tableau 1. Pour les échantillons riches en niobium (x >= 0,5), la phase mixte tend à cristalliser dans la structure rhomboédrique 3s et les paramètres de mailles varient également linéairement en fonction de la composition en niobium comme le montre le tableau 2.

L'estimation de l'erreur de mesure Delta($d_{hkl}$) sur $d_{hkl}$ se calcule, en fonction de l'erreur absolue affectée à la mesure de l'angle 2 thêta, par la relation de Bragg. Une erreur absolue Delta(2 thêta) égale à $\pm$ 0,05° est communément admise. L'intensité $I_{rel}$ affectée à chaque valeur de $d_{hkl}$ est mesurée d'après la surface du pic de diffraction correspondant.

TABLEAU 1

| Phase | a (Å) | c (Å) |
|---|---|---|
| $MoS_2$-2s | 3,16 | 12,29 |
| $Nb_{0,2}Mo_{0,8}S_2$ | 3,20 | 12,05 |
| $Nb_{0,3}Mo_{0,5}S_2$ | 3,22 | 12,02 |
| $Nb_{0,4}Mo_{0,6}S_2$ | 3,25 | 12,00 |
| $NbS_2$-2s | 3,31 | 11,89 |

TABLEAU 2

| Phase | a (Å) | c (Å) |
|---|---|---|
| $MoS_2$-3s | 3,16 | 18,37 |

TABLEAU 2   (suite)

| Phase | a (Å) | c (Å) |
|---|---|---|
| $Nb_{0,6}Mo_{0,4}S_2$ | 3,25 | 18,00 |
| $Nb_{0,7}Mo_{0,3}S_2$ | 3,27 | 17,98 |
| $Nb0,8Mo0,2S_2$ | 3,30 | 17,97 |
| $NbS_2$-3s | 3,33 | 17,81 |

Le dépouillement du diagramme de diffraction des rayons X sous la forme des paramètres de maille présentés dans les tableaux 1 et 2 permet d'identifier le sulfure mixte de niobium et de molybdène.

L'analyse par la technique EXAFS est réalisée au seuil K du niobium à l'aide du rayonnement synchrotron entre 18850 et 19800 eV en mesurant l'intensité absorbée par un échantillon de poudre déposé sur une bande adhésive. Le spectre d'absorption est analysé selon une procédure établie (F.W. Lyttle, D.E. Sayers and E.A. Stern, Physical Review B, vol 11, page 4825, 1975 et E.A. Stern, D.E. Sayers and F.W. Lyttle, Physical Review B, vol 11, page 4836) qui permet de déterminer les distances interatomiques.

Le dépouillement du spectre d'adsorption des rayons X permet de déduire une fonction de distribution radiale. Cette distribution radiale montre un premier pic relatif à l'environnement soufré du niobium et dont la position du maximum donne la distance niobium-soufre ou R1 en général de 2,45 à 2,48 Å typique de $NbS_2$. On observe ensuite sur cette distribution radiale un deuxième pic correspondant à la seconde sphère de coordination du niobium composée d'atomes de niobium ou de molybdène que l'on ne peut distinguer du fait de leurs nombres atomiques très voisins et dont la position du maximum donne la distance moyenne R2 métal-métal (niobium-niobium ou niobium-molybdène) dont la valeur varie en fonction de la composition de la phase mixte comme le montre le tableau 3; ladite valeur se situe entre les valeurs de la distance niobium-niobium dans $NbS_2$ (3,33 Å) et la distance molybdène-molybdène dans $MoS2$ (3,16 Å), et elle est généralement en moyenne de 3,20 à 3,35 Å. Cette distance est en accord avec les distances a déterminées par diffraction X et varie avec la composition de la phase mixte. Les distances reportées dans le tableau 3 sont corrigées du décalage de phase et peuvent donc être comparées aux données obtenues par diffraction X. La détermination des distances interatomiques métal-métal par la technique EXAFS est très précise puisque l'estimation de l'erreur absolue sur la distance est égale à ± 0,02 Å.

TABLEAU 3

| Phase | R1 (Å) | R2 (Å) |
|---|---|---|
| $Nb_{0,2}Mo_{0,8}S_2$ | 2,46 | 3,20 |
| $Nb_{0,3}Mo_{0,7}S_2$ | 2,45 | 3,22 |
| $Nb_{0,4}Mo_{0,6}S_2$ | 2,48 | 3,27 |
| $Nb_{0,6}Mo_{0,4}S_2$ | 2,47 | 3,28 |
| $Nb_{0,7}Mo_{0,3}S_2$ | 2,47 | 3,30 |
| $Nb_{0,8}Mo_{0,2}S_2$ | 2,48 | 3,31 |
| $NbS_2$ | 2,48 | 3,33 |

De façon générale, le procédé de préparation du sulfure mixte massique compris dans le catalyseur de la présente invention comprend les étapes suivantes :

a) on forme un mélange réactionnel qui renferme au moins les composés suivants : au moins une source d'élément du groupe VB, au moins une source d'élément du groupe VIB, éventuellement de l'eau, éventuellement au moins un élément choisi dans le groupe formé par les éléments du groupe VIII, éventuellement au moins une source d'un élément choisi dans le groupe formé par les éléments : P, B, et Si, éventuellement un élément choisi parmi les halogènes, c'est-à-dire les éléments du groupe VIIA, de préférence F,

b) on maintient ledit mélange à une température de chauffage généralement supérieure à environ 40°C, à une pression au moins égale à la pression atmosphérique et en présence d'un composé du soufre jusqu'à ce que l'on obtienne ledit sulfure mixte.

Le mélange réalisé à l'étape a) ci-dessus peut être réalisé simultanément ou successivement, l'ordre important peu, dans le même espace physique ou séparément.

L'étape b) se révèle être très difficile par la plupart des méthodes classiques de sulfuration connues de l'homme du métier. Une méthode préférée selon l'invention consiste à procéder à la sulfuration du mélange, généralement sous forme de solides en poudre, à une température comprise entre 40 et 700°C, de préférence entre 60 et 500°C, sous pression autogène et en présence d'un composé gazeux du soufre tel que de préférence le $CS_2$. On utilise de préférence un autoclave intérieurement revêtu d'un matériau polymère, en général du polytétrafluoroéthylène, à une température supérieure à 100°C. La durée du chauffage du mélange réactionnel nécessaire à la sulfuration dépend de la composition du mélange réactionnel et de la température de réaction. Une telle méthode, décrite dans la littérature pour la synthèse d'un catalyseur comprenant du sulfure de niobium sur alumine (Journal of Catalysis, vol. 156, pages 279-289 (1995)) et dans le brevet EP-A-440.516 pour la synthèse d'un composé binaire du soufre, c'est-à-dire d'un sulfure simple comprenant du soufre et un autre élément, métal de transition ou terre rare, a été trouvée applicable pour la synthèse des sulfures mixtes selon la présente invention.

De plus, l'invention concerne aussi une méthode de synthèse originale de sulfure mixte de composition particulière, particulièrement intéressante pour obtenir le catalyseur de la présente invention dans le cas où le catalyseur comprend du niobium et du molybdène. Ladite méthode consiste en l'utilisation, pour la synthèse de sulfure mixte, d'oxyde de niobium et de molybdène de formule $Nb_2Mo_3O_{14}$ que l'on sulfure. Le composé $Nb_2Mo_3O_{14}$ est généralement obtenu par calcination du mélange stoechiométrique de $MoO_3$ et $Nb_2O_5$ à une température comprise entre 200 et 1200°C, de préférence 300 à 1100°C et de manière encore plus préférée de 350°C à 1000°C. La sulfuration peut se faire par toute méthode connue de l'homme du métier. Une méthode de sulfuration classique bien connue de l'homme du métier consiste à chauffer le mélange de solides sous flux d'un mélange hydrogène-hydrogène sulfuré ou sous flux d'un mélange azote-hydrogène sulfuré à une température comprise entre 150 et 800°C, de préférence entre 250 et 600°C, généralement dans une zone réactionnelle à lit traversé. Une autre méthode de sulfuration est la méthode de sulfuration décrite ci-dessus, en autoclave en présence d'un composé gazeux du soufre tel le $CS_2$.

La surface spécifique du sulfure mixte peut être augmentée en procédant à une intercalation de lithium dans le réseau cristallin du sulfure mixte tel que synthétisé par les méthodes décrites ci-dessus, puis à une désintercalation du lithium. Cette opération conduit à une exfoliation du sulfure mixte et à une augmentation de la surface spécifique. L'intercalation du lithium est réalisée généralement en mettant en suspension le sulfure mixte dans une solution d'hydrocarbure léger, tel que l'hexane, contenant un alkyllithium, tel que le butyllithium (M.B. Dines, Material Research Bulletin, 10, 287 (1975)). On peut ainsi intercaler jusqu'à un atome de lithium pour un atome d'élément choisi dans le groupe VB ou le groupe VIB. Le lithium est ensuite désintercalé généralement en mettant le solide intercalé en suspension dans l'eau. Le sulfure mixte peut ensuite être récupéré par exemple par filtration et séchage à 80°C .

Les catalyseurs supportés de la présente invention peuvent être préparés par toute méthode connue de l'homme du métier.

De façon générale, les méthodes de préparation du catalyseur sulfure mixte supporté de la présente invention consistent à préparer une composition comprenant le sulfure mixte et le support. Quelques unes de ces méthodes sont décrites ci-après. En général, il est possible de mélanger la matrice généralement sous forme de poudre avec tout précurseur du sulfure mixte mécaniquement, puis de procéder à la sulfuration, ainsi qu'il est décrit plus en détail ci-après. Mais il est aussi possible de mélanger des précurseurs de matrice et de sulfure mixte, et soit d'obtenir une poudre que l'on sulfure, soit de sulfurer ledit mélange de précurseurs et d'obtenir une poudre dudit mélange sulfuré, ainsi qu'il est connu de l'homme du métier et que l'on évoque brièvement ci-après. Dans tous les cas il est a priori possible d'ajouter les éléments éventuels présents sur le catalyseur supporté selon l'invention à tout étape de la préparation, selon les méthodes connues de l'homme du métier.

Un des procédés de préparation du sulfure mixte supporté compris dans le catalyseur de la présente invention comprend les étapes suivantes :

a) on forme un mélange réactionnel qui renferme au moins les composés suivants : au moins un support choisi dans le groupe formé par les matrices, au moins une source d'élément du groupe VB, au moins une source d'élément du groupe VIB, éventuellement de l'eau, éventuellement au moins un élément choisi dans le groupe formé par les éléments du groupe VIII, éventuellement au moins une source d'un élément choisi dans le groupe formé par les éléments : P, B, et Si, éventuellement au moins une source d'un élément choisi parmi les halogènes, c'est-à-dire les éléments du groupe VIIA, de préférence le fluor,

b) on maintient ledit mélange à une température de chauffage généralement supérieure à environ 40°C en présence d'un composé du soufre jusqu'à ce que l'on obtienne un solide contenant au moins le support et le sulfure mixte.

De préférence l'étape a) est une étape d'imprégnation du support.

Ainsi, par exemple dans le cas préféré où le métal du groupe VB est le niobium et où le métal du groupe VIB est le molybdène, il est possible d'imprégner la matrice, par exemple de l'alumine, par de l'heptamolybdate d'ammonium, de procéder à un séchage à 80°C, puis d'imprégner par de l'oxalate de niobium, de procéder à un séchage à 80°C, et de procéder à une sulfuration par exemple et de façon préférée par $CS_2$ en autoclave sous pression autogène, par exemple à 400°C pendant 10 heures.

Il est aussi possible de mélanger mécaniquement le sulfure mixte massique synthétisé selon l'une des méthodes décrites précédemment avec le support, puis éventuellement de procéder à une mise en forme.

Il est également possible de préparer une suspension aqueuse de phase sulfure mixte exfoliée en versant une phase sulfure mixte intercalée par du lithium dans l'eau puis désintercalée, et en imprégnant un support avec cette solution puis éventuellement en procédant à une mise en forme.

Il est aussi possible de mélanger mécaniquement la phase oxyde particulière $Nb_2Mo_3O_{14}$ décrite précédemment avec le support, puis de sulfurer ledit mélange mécanique éventuellement mis en forme. Ladite sulfuration peut se faire par toute méthode connue de l'homme du métier, telle que la sulfuration par une phase gazeuse comportant de l'hydrogène sulfuré et éventuellement de l'azote, ou bien la méthode de sulfuration décrite ci-dessus, en autoclave en présence d'un composé gazeux comprenant le soufre, tel que $CS_2$.

Il est encore possible de procéder à la synthèse du catalyseur à partir de solides comprenant au moins un élément du groupe VB, au moins un élément du groupe VIB, lesdits solides étant généralement obtenus respectivement à partir des sels d'élément du groupe VB et des sels d'élément du groupe VIB, lesdites synthèses étant réalisées simultanément ou successivement, l'ordre important peu, dans le même espace physique ou séparément; puis de procéder au mélange mécanique desdits solides avec le support, et enfin, après une mise en forme éventuelle, de procéder à la sulfuration dudit mélange mécanique éventuellement mis en forme par un composé soufré de façon à obtenir ledit sulfure mixte. Il est encore possible de réaliser le mélange de poudres comprenant la source d'élément du groupe VB, la source d'élément du groupe VIB, éventuellement de l'eau, éventuellement la source de l'élément choisi parmi, P, B et Si, éventuellement la source de l'élément du groupe VIIA et éventuellement la source de soufre et d'imprégner le support.

La sulfuration des solides contenant au moins un élément du groupe VB sous forme oxyde se révèle être très difficile par la plupart des méthodes classiques de sulfuration connues de l'homme du métier. Une méthode préférée selon l'invention, décrite précédemment consiste à ne pas calciner le catalyseur et à procéder à la sulfuration par un composé gazeux comprenant le soufre tel que CS2 en autoclave sous pression. En effet les catalyseurs contenant au moins un élément du groupe VB supporté sur une matrice du type alumine sont connus pour être très difficiles à sulfurer une fois que l'association élément du groupe VB-alumine a été calcinée à une température supérieure à 200°C.

Il est aussi possible de réaliser le mélange de poudres comprenant la source de l'élément du groupe VB, la source de l'élément du groupe VIB, éventuellement de l'eau, éventuellement la source de l'élément choisi parmi, P, B et Si, éventuellement la source de l'élément du groupe VIIA et éventuellement la source de soufre et d'imprégner le support ou préférentiellement la matrice.

Le support est préalablement mise en forme et calcinée. La mise en forme peut être réalisée par exemple par extrusion, par pastillage, par la méthode de la goutte d'huile (oil-drop), par granulation au plateau tournant ou par toute autre méthode bien connue de l'homme du métier. Le support préformé est alors éventuellement calcinée sous air, usuellement à une température d'au moins 300°C, couramment d'environ 350 à 1000°C.

Lorsque le support est imprégné, l'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

La mise en forme du catalyseur supporté selon l'invention peut être une extrusion, un pastillage, la méthode de la goutte d'huile (oil-drop), une granulation au plateau tournant ou toute autre méthode bien connue de l'homme du métier.

Le sulfure mixte, de même que l'élément du groupe VIII, de même que l'élément choisi dans le groupe formé par P, B et Si et l'élément choisi dans le groupe VIIA des halogénures, de préférence le fluor, peuvent être introduits dans le catalyseur à divers niveaux de la préparation et de diverses manières.

La phase sulfure mixte peut être introduite en partie seulement (cas par exemple de l'association d'au moins un métal du groupe VB et/ou du groupe VIB et d'au moins un métal du groupe VIII) ou en totalité au moment du malaxage du support poreux.

Le métal du groupe VIII de même que l'élément choisi dans le groupe formé par P, B, Si et l'élément choisi parmi les halogénures du groupe VIIA, peuvent être introduits par une ou plusieurs opérations d'échange ionique sur la matrice calcinée constituée du sulfure mixte dispersé dans la matrice choisie, à l'aide d'une solution contenant au moins un sel précurseur de métal du groupe VIII. Elle peut être introduite par au moins une opération d'imprégnation du support mis en forme et calciné, par une solution de précurseur d'au moins un métal du groupe VIII (notamment le cobalt et/ou le nickel), tout précurseur de métal du groupe VIII étant de préférence introduit en même temps ou après tout précurseur de métal du groupe VB et VIB.

Dans le cas où les métaux sont introduits en plusieurs imprégnations, des sels précurseurs correspondants, une étape de séchage intermédiaire du catalyseur est généralement effectuée à une température généralement comprise entre 60 et 250°C.

Les sources d'élément du groupe VB qui peuvent être utilisées sont bien connues de l'homme du métier. Par exemple, parmi les sources de niobium, on peut utiliser les oxydes, tel que NbO, $Nb_2O_2$, $Nb_2O_3$, le pentaoxyde de diniobium $Nb_2O_5$, l'acide niobique $Nb_2O_5.H_2O$, les hydroxydes de niobium et les polyoxoniobates, les alkoxydes de niobium de formule $Nb(OR_1)_3$ où $R_1$ est un radical alkyle, l'oxalate de niobium $NbO(HC_2O_4)_5$, le niobate d'ammonium, les sels de niobium comme le fluorure de niobium, lé potassium fluorure de niobium, le chlorure de niobium, le bromure de niobium, l'iodure de niobium, l'oxyfluorure de niobium, l'oxychlorure de niobium, l'oxybromure de niobium, l'oxyiodure de niobium, le phosphate de niobium ($NbOPO_4$), l'hydrure de niobium, le nitrure de niobium, l'oxynitrure de niobium, le borure de niobium, le carbure de niobium, l'oxycarbure de niobium, le phosphure de niobium, le sulfure de niobium, les complexes carbonyles du niobium, les oxynitrates de niobium, les complexes cyclopentadiènyles du niobium, les thioniobates, les carboxylates de niobium. On utilise de préférence l'oxalate de niobium ou le niobate d'ammonium.

Les sources d'élément du groupe VIB qui peuvent être utilisées sont bien connues de l'homme du métier. Par exemple, parmi les sources de molybdène, on peut utiliser les oxydes et hydroxydes de molybdène, l'acide molybdique, l'acide molybdophosphorique, l'acide molybdosilicique, l'acétylacétonate de molybdène, le xanthate de molybdène, le molybdate d'ammonium, l'heptamolybdate d'ammonium, les sels de molybdène comme le fluorure de molybdène, le chlorure de molybdène, le bromure de molybdène, l'iodure de molybdène, l'oxyfluorure de molybdène, l'oxychlorure de molybdène, l'oxybromure de molybdène, l'oxyiodure de molybdène, l'hydrure de molybdène, le nitrure de molybdène, l'oxynitrure de molybdène, le borure de molybdène, le carbure de molybdène, l'oxycarbure de molybdène, le phosphure de molybdène, le sulfure de molybdène, le molybdène hexacarbonyl, les thiomolybdates, les thiophosphates de molybdène, les xanthates et thioxanthates de molybdène, les dithiophosphates, les dithiocarbamates et dithiophosphinates de molybdène, les carboxylates de molybdène. On utilise de préférence l'oxyde de molybdène, le molybdate d'ammonium ou l'heptamolybdate d'ammonium.

La source de soufre peut être le soufre élémentaire, le sulfure de carbone, l'hydrogène sulfuré, les hydrocarbures soufrés tels que le diméthyl sulfure, le diméthyl disulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est le sulfure de carbone ou l'hydrogène sulfuré.

La source de phosphore préférée est l'acide phosphorique $H_3PO_4$, mais ses sels et esters comme les phosphates alcalins, phosphates d'ammonium, les phosphates de gallium ou les phosphates d'alkyles conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser un hydrogel, un aérogel ou une suspension colloïdale, les oxydes de précipitation, les oxydes provenant de l'hydrolyse d'esters tel que l'orthosilicate d'éthyle $Si(OEt)_4$, les siloxanes, les silicates amorphes, par exemple d'aluminium, de phosphore, les silicates mésoporeux, et les silicates cristallisés tels que les silicates alcalins et alcalino-terreux, les silicates de métaux de transition tels que les silicates de cobalt, de nickel ou les silicates d'halogénures comme le fluorosilicate d'ammonium $(NH_4)_2SiF_6$ ou le fluorosilicate de sodium $Na_2SiF_6$. Le silicium peut être ajouté par exemple par imprégnation de silicate d'éthyle en solution dans un alcool.

La source de bore peut être un borate amorphe, tels que le biborate ou le pentaborate d'ammonium, le borate d'aluminium, le borate de phosphore et les borates cristallisés tel que les borosilicates. Le bore peut être introduit par exemple par une solution d'acide borique dans un alcool.

Les source d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium. Les anions chlorures peuvent être introduit sous la forme d'acide chlorhydrique, ou de ces sels. Ces sels sont formés avec des métaux alcalins, l'ammonium ou un composé organique. Dans ce dernier cas, le sel est avantageusement formé dans le mélange réactionnel par réaction entre le composé organique et l'acide chlorhydrique.

Le catalyseur de la présente invention peut renfermer un élément du groupe VIII tel que fer, cobalt, nickel, ruthénium, rhodium, palladium, osmium, iridium ou platine.

Parmi les métaux du groupe VIII on préfère employer un métal choisi dans le groupe formé par le fer, le cobalt, le nickel et le ruthénium. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférés étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

Lorsque le support comprend au moins une matrice, la matrice minérale poreuse, habituellement amorphe ou mal cristallisée, est en général constituée d'au moins un oxyde réfractaire sous forme amorphe ou mal crsitallisé. Ladite matrice est habituellement choisie dans le groupe formé par l'alumine, la silice, la silice-alumine, la magnésie, l'oxyde de titane ou l'oxyde de zirconium, ou un mélange de aux moins deux des oxydes cités ci dessus. On peut choisir également les aluminates. On préfère utiliser des matrices contenant de l'alumine, sous toutes ces formes connues de l'homme du métier, par exemple l'alumine gamma. On peut aussi avantageusement utiliser des mélanges d'alumine et de silice et des mélanges d'alumine et d'oxyde de bore.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

Les catalyseurs utilisés en hydroraffinage et/ou en hydrocraquage associent une matrice de grande surface (100 à 800 $m^2.g^{-1}$ généralement) présentant une acidité superficielle faible à forte et une fonction hydrogénante apportée par au moins un métal du groupe VIB de la classification périodique tel que chrome, molybdène ou tungstène et/ou au moins un métal du groupe VIII tel que fer, cobalt, nickel, ruthénium, rhodium, palladium, osmium, iridium ou platine. Lesdits catalyseurs peuvent également éventuellement contenir au moins un élément choisi dans le groupe (P, Si, B, F).

Les catalyseurs obtenus par la présente invention sont utilisés pour l'hydroraffinage de charges hydrocarbonées comprenant les réactions comme l'hydrogénation, l'hydrodéazotation, l'hydrodéoxygénation, l'hydrodéaromatisation, l'hydrodésulfuration. Ils peuvent également être utilisés pour l'hydrocraquage de charges hydrocarbonnées.

Les charges employées dans le procédé sont généralement choisies dans le groupe formé par les essences, les gazoles, les gazoles sous vide, les résidus désasphaltés ou non, les huiles paraffiniques, les cires et paraffines, et elles comprenent généralement des composés aromatiques et/ou oléfiniques et/ou naphténiques et/ou paraffiniques. Elles peuvent contenir des hétéroatomes tels que soufre, oxygène et azote au moins un métal. Les conditions de l'hydroraffinage telles que température, pression, taux de recyclage d'hydrogène, vitesse volumique horaire, pourront être très variables en fonction de la nature de la charge, de la qualité des produits désirés et des installations dont dispose le raffineur. Elles sont bien connues de l'homme du métier.

La température est en général supérieure à 200°C et souvent comprise entre 280°C et 480°C. La pression est en général supérieure à 0,1 MPa et souvent supérieure à 5 MPa. La présence d'hydrogène est en général nécessaire avec un taux de recyclage d'hydrogène généralement d'au moins 80 et souvent compris entre 200 et 4000 litres d'hydrogène par litre de charge. La vitesse volumique horaire est comprise en général entre 0,1 et 20 h$^{-1}$.

Les résultats qui importent au raffineur sont l'activité en HDS, en HDN et en conversion. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que l'activité peut être augmentée par une élévation de température, mais c'est souvent au détriment de la stabilité du catalyseur. La stabilité ou durée de vie s'améliore avec une augmentation de la pression ou du taux de recyclage d'hydrogène, mais ceci se fait au détriment de l'économie du procédé.

Les exemples suivants illustrent la présente invention sans toutefois en limiter la portée.

| TABLEAU SYNTHETIQUE DES CATALYSEURS DES EXEMPLES | | | |
|---|---|---|---|
| Catalyseur | Composition du catalyseur | calciné ou séché | type d'exemple |
| A0 | NiMo/alumine standard | calciné | comparatif |
| A1 | 14% Mo/ alumine | séché | comparatif |
| B1 | 13% Nb/alumine | séché | comparatif |
| B2 | 4% Nb/alumine | séché | comparatif |
| C1 | 7,5% Ni/alumine | séché | comparatif |
| C2 | 2,3 % Ni/alumine | séché | comparatif |
| D1 | (Nb+Mo)/alumine, r=0,2 | séché | selon l'invention |
| D2 | (Nb+Mo) /alumine, r=0,3 | séché | selon l'invention |
| D3 | (Nb+Mo)/alumine, r=0,4 | séché | selon l'invention |

(suite)

| TABLEAU SYNTHETIQUE DES CATALYSEURS DES EXEMPLES | | | |
|---|---|---|---|
| Catalyseur | Composition du catalyseur | calciné ou séché | type d'exemple |
| D4 | (Nb+Mo) /alumine, r=0,5 | séché | selon l'invention |
| D5 | (Nb+Mo)/alumine, r=0,7 | séché | selon l'invention |
| D6 | (Nb+Mo)/alumine, r=0,9 | séché | selon l'invention |
| E | ((Nb+Mo)+Ni) / alumine=D2+Ni | séché | selon l'invention |
| F1 | Mo+Nb+Ni/alumine | calciné | comparatif |
| F2 | Nb+Mo+Ni/alumine | calciné | comparatif |
| G1 | $Nb_{0,4}Mo_{0,6}S_2$ massique | séché | selon l'invention |
| G2 | $NbS_2$ massique | séché | comparatif |
| G3 | $MoS_2$ massique | séché | comparatif |
| H1 | $Nb_{0,4}Mo_{0,6}S_2$ ex oxyde | séché | selon l'invention |
| I1 | $Nb_{0,2}W_{0,8}S_2$ massique | séché | selon l'invention |
| I2 | $WS_2$ massique | séché | comparatif |
| J1 | $Ta_{0,4}Mo_{0,6}S_2$ massique | séché | selon l'invention |
| J2 | $TaS_2$ massique | séché | comparatif |
| K1 | $V_{2,39}Mo_{0,61}S_{3,89}$ | séché | selon l'invention |
| K2 | $V_3S_4$ | séché | comparatif |
| L1 | $V_{0,59}Cr_{2,41}S_{3,86}$ | séché | selon l'invention |
| L2 | $Cr_3S_4$ | séché | comparatif |
| M1 | $Nb_{0,35}Mo_{0,55}Ni_{0,1}S_2$ =G1+Ni | séché | selon l'invention |
| N1 | G1 + Ru | séché | selon l'invention |
| O1 | G1 + Li | séché | selon l'invention |

Exemple 1

Préparation du support alumine entrant dans la composition des catalyseurs conformes à l'invention.

Nous avons fabriqué une matrice à base d'alumine en grande quantité de façon à pouvoir préparer les catalyseurs décrits à partir du même support mis en forme. Pour ce faire, nous avons utilisé le gel commercial SB3 commercialisé par la société Condéa. Ce gel a été mélangé à de l'eau et à de l'acide nitrique puis malaxé pendant 15 minutes. A l'issue de ce malaxage, la pâte obtenue est passée à travers une filière cylindrique de façon à obtenir des extrudés de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques d'alumine de 1,2 mm de diamètre.

Exemple 2

Catalyseur NiMo supporté (comparatif)

Nous avons ajouté du molybdène sur la matrice extrudé de l'exemple 1 par imprégnation à sec en milieu aqueux. Le sel de molybdène est l'heptamolybdate d'ammonium $Mo_7O_{24}(NH_4)_6.4H_2O$. Après imprégnation à sec, les extrudés sont séchés une nuit à 120°C puis calcinés à 350°C pendant 2 heures sous air humide contenant 7,5% volume d'eau. Nous avons alors ajouté du nickel sur ce support imprégné de molybdène par imprégnation à sec en milieu aqueux de nitrate de nickel $Ni(NO_3)_2.6H_2O$. Après imprégnation à sec, les extrudés sont séchés une nuit à 120°C puis calcinés à 500°C pendant 2 heures sous air humide contenant 7,5% volume d'eau. La teneur finale en trioxyde de molybdène est de 14,0% poids ce qui correspond à 0,097 mole de l'élément molybdène pour 100 g de catalyseur fini. La teneur finale en nickel est de 2,5% poids ce qui correspond à 0,034 mole de l'élément nickel pour 100 g de catalyseur fini. Le catalyseur A0 ainsi obtenu est représentatif des catalyseurs industriels.

Exemple 3

Catalyseur Mo supporté (comparatif)

Nous avons ajouté du molybdène sur la matrice extrudé de l'exemple 1 par imprégnation à sec en milieu aqueux. Le sel de molybdène est l'heptamolybdate d'ammonium $Mo_7O_{24}(NH_4)_6.4H_2O$. Après imprégnation à sec, les extrudés sont séchés une nuit à 80°C. La teneur finale en trioxyde de molybdène est de 13,8% poids ce qui correspond à 0,096 mole de l'élément molybdène pour 100g de catalyseur fini. Ce catalyseur A1 est ici baptisé "à forte teneur en molybdène"; la teneur en molybdène est du même ordre de grandeur que celle des catalyseurs industriels.

Exemple 4

Catalyseurs Nb supportés (comparatif)

Nous avons ajouté du niobium sur la matrice extrudé de l'exemple 1 par imprégnation à sec d'une solution de pentaoxyde de niobium $Nb(OEt)_5$ dans l'éthanol. Après imprégnation à sec, les extrudés sont séchés une nuit à 80°C. Un premier catalyseur B1 est préparé avec une teneur finale en pentaoxyde de diniobium de 13,1% poids ce qui correspond à 0,099 moles de l'élément niobium pour 100g de catalyseur fini. Un second catalyseur B2 est préparé avec une faible teneur finale en pentaoxyde de diniobium de 4,3% poids ce qui correspond à 0,032 moles de l'élément niobium pour 100g de catalyseur fini.

Exemple 5

Catalyseurs Ni supportés (comparatif)

Nous avons fabriqué un premier catalyseur de type nickel déposé sur alumine avec une teneur en nickel élevée c'est-à-dire proche de celle du catalyseur de type molybdène déposé sur alumine décrit dans l'exemple A1. Le nickel a été ajouté sur la matrice extrudé de l'exemple 1 par imprégnation à sec en milieu aqueux en utilisant le nitrate de nickel $Ni(NO_3)_2.6H_2O$ comme précurseur. Après imprégnation à sec, les extrudés sont séchés une nuit à 80°C. Le catalyseur C1 ainsi obtenu a une teneur finale en nickel de 7,5% poids ce qui correspond à 0,096 mole de l'élément nickel pour 100g de catalyseur fini.
Nous avons fabriqué un deuxième catalyseur à faible teneur en nickel. La teneur finale en nickel est de 2,27% poids ce qui correspond à 0,031 mole de l'élément nickel pour 100g de catalyseur fini. Le catalyseur C2 ainsi obtenu est dit "à faible teneur en nickel" ; la teneur en nickel est du même ordre de grandeur que celle des catalyseurs industriels.

Exemple 6

Catalyseurs sulfure mixte de niobium molybdène [Nb+Mo] supportés (conforme à l'invention)

Une série de précurseurs des catalyseurs contenant une phase sulfure mixte de niobium et de molybdène avec une proportion atomique de niobium r=Nb/(Nb+Mo) variant entre 0 et 1 a été préparée. Les deux métaux sont introduits par imprégnation à sec du support alumine de l'exemple 1 en utilisant l'heptamolybdate d'ammonium $Mo_7O_{24}(NH_4)_6.4H_2O$ et l'oxalate de niobium $Nb(HC_2O_4)_5$ comme précurseurs. Après chaque imprégnation à sec, les extrudés sont séchés une nuit à 80°C. La teneur finale en élément niobium+molybdène déposé sur l'alumine de l'exemple 1 est de 0,100 mole pour 100 g de catalyseur fini. Les différents catalyseurs obtenus et leurs teneurs pondérales en oxyde sont indiqués dans le tableau 4 ci-après.

TABLEAU 4

| Teneurs en oxyde des catalyseurs contenant du niobium et du molybdène. | | | |
|---|---|---|---|
| Ref Catalyseur | $r=\frac{Nb}{(Nb+Mo)}$ | $MoO_3$ (%pds) | $Nb_2O_5$ (%pds) |
| D1 | 0,2 | 11,5 | 2,66 |

TABLEAU 4 (suite)

| Teneurs en oxyde des catalyseurs contenant du niobium et du molybdène. | | | |
|---|---|---|---|
| Ref Catalyseur | $r=\frac{Nb}{Nb+Mo}$ | $MoO_3$ (%pds) | $Nb_2O_5$ (%pds) |
| D2 | 0,3 | 10,1 | 3,98 |
| D3 | 0,4 | 8,64 | 5,32 |
| D4 | 0,5 | 7,2 | 6,65 |
| D5 | 0,7 | 4,32 | 9,31 |
| D6 | 0,9 | 1,44 | 11,9 |

Exemple 7

Catalyseur [Nb+Mo]+Ni supporté (conforme à l'invention)

Nous avons pris une partie du catalyseur D2 dont la fabrication vient d'être décrite et nous y avons rajouté du nickel par imprégnation à sec en milieu aqueux en utilisant le $Ni(NO_3)_2.6H_2O$ comme précurseur. Après imprégnation à sec, les extrudés sont séchés une nuit à 80°C. On obtient le catalyseur E dont les teneurs pondérales finales respectives en trioxyde de molybdène, pentaoxyde de diniobium et oxyde de nickel sont de 10,2%, 3,8% et 2,15% ce qui correspond respectivement à 0,070, 0,029 et 0,029 moles des éléments molybdène, niobium et nickel pour 100g de catalyseur fini.

Exemple 8

Catalyseur Mo+Nb+Ni supporté (non conforme à l'invention ; cf. le brevet US-A-5.275.994)

Les catalyseurs contenant du molybdène et du niobium de l'exemple 6 et celui contenant du molybdène, du niobium et du nickel de l'exemple 7 n'ont pas été calcinés après imprégnation des éléments ceci afin d'obtenir une phase sulfurée. En effet il est connu que l'oxyde de niobium supporté sur alumine obtenu par calcination sous air à une température supérieure à 200° C d'un échantillon de niobium sur alumine séché tel que décrit dans l'exemple 4, est très difficile à sulfurer. Le niobium supporté sur alumine calcinée reste très difficile à sulfurer, même en présence de molybdène et/ou de nickel. A titre de comparaison on a donc préparé un catalyseur contenant du molybdène, du niobium et du nickel supporté sur alumine et calciné à une température supérieure à 200°C.

Le catalyseur F1 est préparé par imprégnation à sec successives de molybdène puis de niobium puis de nickel. Le catalyseur F2 est préparé par imprégnation à sec successives de niobium puis de molybdène puis de nickel. Entre chaque imprégnation, les extrudés sont séchés une nuit à 120°C puis calciné à 500°C pendant 2 heures sous air humide contenant 7,5% volume d'eau. Les étapes d'imprégnation utilisées sont identiques à celles décrites pour les catalyseurs A1, B2 et C2. Les teneurs pondérales finales respectives en trioxyde de molybdène, pentaoxyde de diniobium et oxyde de nickel sont de 10,2%, 4,1% et 2,0% ce qui correspond respectivement à 0,072, 0,031 et 0,027 moles des éléments molybdène, niobium et nickel pour 100g de catalyseur fini.

Exemple 9

Sulfuration des catalyseurs par $CS_2$.

Les catalyseurs préparés dans les exemples ci-dessus sont sulfurés dans un autoclave sous pression autogène en présence de $CS_2$. Pour 100 g de catalyseur on ajoute 20 ml de $CS_2$ dans l'autoclave, on ferme et on chauffe à 400°C pendant 10 heures. La pression interne est alors d'environ 4 MPa. Cette sulfuration est dénommée S1.

Exemple 10

Sulfuration des catalyseurs par $H_2S$.

Les catalyseurs préparés dans les exemples ci-dessus sont sulfurés dans un réacteur à lit fixe de catalyseur balayé par un courant de gaz contenant 15% d'$H_2S$ dans l'azote à pression atmosphérique. Pour 5 g de catalyseur on fait passer 2 litres par heure du mélange et on chauffe le catalyseur à une température de 400°C pendant 10 heures.

Cette sulfuration est dénommée S2.

Exemple 11

Analyse des catalyseurs supportés par absorption des rayons X.

L'analyse par la technique EXAFS est réalisée au seuil K du niobium à l'aide du rayonnement synchrotron entre 18850 et 19800 eV en mesurant l'intensité absorbée par un échantillon de poudre déposé sur une bande adhésive. Elle permet de déterminer les distances interatomiques. Les distances R2 mesurées par EXAFS pour tous les échantillons contenant du niobium et sulfurés par la méthode Si et par la méthode S2 sont reportées dans le tableau 6.

TABLEAU 5

| Catalyseur sulfuré par méthode S1 | R2 (Å) | Catalyseur sulfuré par méthode S2 | R2 (Å) |
|---|---|---|---|
| B1-S1 | 3,33 | B1-S2 | 3,33 |
| D1-S1 | 3,20 | D1-S2 | 3,19 |
| D2-S1 | 3,20 | D2-S2 | 3,21 |
| D3-S1 | 3,22 | D3-S2 | 3,22 |
| D4-S1 | 3,27 | D4-S2 | 3,28 |
| D5-S1 | 3,30 | D5-S2 | 3,29 |
| D6-S1 | 3,32 | D6-S2 | 3,32 |
| E-S1 | 3,21 | E-S2 | 3,21 |
| F1-S1 | 3,33 | F1-S2 | 3,32 |
| F2-S1 | 3,33 | F2-S2 | 3,32 |

Quelle que soit la méthode de sulfuration, les catalyseurs contenant à la fois du niobium et du molybdène (D1 à D6) ont une distance métal-métal R2 de la phase sulfure supérieure à la phase NbS2 du catalyseur contenant le niobium seul (B1). La présence de nickel ne change pas cette situation. (catalyseur E). La distance métal-métal R2, supérieure à celle de $NbS_2$, et donc intermédiaire entre la valeur de $NbS_2$ et $MoS_2$, indique la présence d'une phase mixte de niobium et de molybdène dans les catalyseurs D1 à D6 et E. Si le molybdène et le niobium sont introduits successivement avec une calcination intermédiaire (catalyseurs F1 et F2), on note une distance métal-métal R2 identique à celle de $NbS_2$, malgré la présence de molybdène, ce qui indique qu'il n'y a pas eu formation de phase mixte de niobium et de molybdène.

Exemple 12

Préparation du sulfure mixte de niobium et de molybdène entrant dans la composition des catalyseurs conformes à l'invention.

Dans cette préparation, on utilise un mélange de poudre d'oxalate de niobium (21,5 g) et d'heptamolybdate d'ammonium (10,6 g) que l'on introduit dans un autoclave avec 12 ml de $CS_2$. On ferme l'autoclave et on chauffe à 400°C pendant 10 heures. La pression interne est alors d'environ 3,6 MPa. Après réaction, le solide G1 obtenu est filtré, lavé à l'eau distillée, séché à 40°C. Le spectre de diffraction des rayons X correspond à celui du tableau 1 de la présente description. L'analyse chimique du solide G1 conduit à la formule suivante pour la forme anhydre et débarrassée du composé organique $Nb_{0,38}Mo_{0,62}S_{1,96}$.

De la même manière que précédemment on prépare un échantillon de sulfure de niobium en ajoutant dans l'autoclave, 53,8 g d'oxalate de niobium et 12 ml de $CS_2$. On obtient ainsi le solide G2 de composition $NbS_{1,9}$ déterminée par analyse chimique.

De la même manière que précédemment on prépare un échantillon de sulfure de molybdène en ajoutant dans l'autoclave, 17,6 g d'heptamolybdate d'ammonium et 12 ml de $CS_2$. On obtient ainsi le solide G3 de composition $MoS_{1,93}$ déterminée par analyse chimique.

Exemple 13

Préparation du sulfure mixte de niobium et de molybdène entrant dans la composition des catalyseurs conformes à l'invention.

Dans cette préparation, on utilise un mélange de poudre de pentaoxyde de niobium (45,2 g) et trioxyde de molybdène (86,4g) que l'on calcine à 600°C sous air en réacteur à lit traversé sous un débit d'air de 2 l/h de manière à obtenir un oxyde mixte de niobium et de molybdène de formule $Nb_2Mo_3O_{10}$. Cet oxyde est ensuite sulfuré dans un réacteur à flux continu en passant un mélange d'hydrogène sulfuré dans l'azote (10% H2S dans N2) à 650°C pendant 2 heures à pression atmosphérique. On obtient ainsi le solide H1.

Après réaction, le solide H1 obtenu, entièrement cristallisé, a un spectre de diffraction des rayons X correspondant à celui du tableau 1 de la présente description.

L'analyse chimique du solide H1 conduit à la formule suivante pour la forme anhydre : $Nb_{0,4} Mo_{0,6} S_{1,8}$

Exemple 14

Préparation du sulfure mixte de niobium et de tungstène entrant dans la composition des catalyseurs conformes à l'invention.

Dans cette préparation, on utilise un mélange de poudre d'oxalate de niobium (10,7 g) et d'ammonium para-tungstate $W_{12}O_{40}H_2(NH_4)_6.4H_2O$ (19,8 g) que l'on introduit dans un autoclave avec 12 ml de $CS_2$. On ferme l'autoclave et on chauffe à 400°C pendant 10 heures. La pression interne est alors d'environ 3,8 MPa.

Après réaction, le solide I1 obtenu est filtré, lavé à l'eau distillée, séché à 40°C. L'analyse chimique du solide I1 conduit à la formule suivante pour la forme anhydre et débarrassée du composé organique $Nb_{0,19}W_{0,81}S_{1,93}$.

De la même manière que précédemment on prépare un échantillon de sulfure de tungstène en ajoutant dans l'autoclave, 24,6 g d'ammonium paratungstate et 12 ml de $CS_2$. On obtient ainsi le solide I2 de composition $WS_{1,88}$ déterminée par analyse chimique.

Exemple 15

Préparation du sulfure mixte de tantale et de molybdène entrant dans la composition des catalyseurs conformes à l'invention.

Dans cette préparation, on utilise un mélange de poudre de pentaoxyde de tantale (8,8 g) et d'oxyde de molybdène $MoO_3$ (8,6 g) que l'on introduit dans un autoclave avec 12 ml de $CS_2$. On ferme l'autoclave et on chauffe à 400°C pendant 10 heures. La pression interne est alors d'environ 3,8 MPa.

Après réaction, le solide J1 obtenu est filtré, lavé à l'eau distillée, séché à 40°C. L'analyse chimique du solide J1 conduit à la formule suivante pour la forme anhydre et débarrassée du composé organique $Ta_{0,39}Mo_{0,61}S_{1,83}$.

De la même manière que précédemment on prépare un échantillon de sulfure de tantale en ajoutant dans l'autoclave, 22,6 g de pentaoxyde de tantale et 12 ml de $CS_2$. On obtient ainsi le solide J2 de composition $TaS_{1,82}$ déterminée par analyse chimique.

Exemple 16

Préparation du sulfure mixte de vanadium et de molybdène entrant dans la composition des catalyseurs conformes à l'invention.

Dans cette préparation, on utilise un mélange de poudre de pentaoxyde de vanadium (21,8 g) et d'oxyde de molybdène $MoO_3$ (8,6 g) que l'on introduit dans un autoclave avec 24 ml de $CS_2$. On ferme l'autoclave et on chauffe à 400°C pendant 10 heures. La pression interne est alors d'environ 4,2 MPa.

Après réaction, le solide K1 obtenu est filtré, lavé à l'eau distillée, séché à 40°C. L'analyse chimique du solide K1 conduit à la formule suivante pour la forme anhydre et débarrassée du composé organique $V_{2,39}Mo_{0,61}S_{3,89}$.

De la même manière que précédemment on prépare un échantillon de sulfure de vanadium en ajoutant dans l'autoclave, 27,6 g de pentaoxyde de vanadium et 24 ml de $CS_2$. On obtient ainsi le solide K2 de composition $V_{2,9}S_{3,9}$ déterminée par analyse chimique.

Exemple 17

Préparation du sulfure mixte de vanadium et de chrome entrant dans la composition des catalyseurs conformes à l'invention.

Dans cette préparation, on utilise un mélange de poudre de pentaoxyde de vanadium (5,46 g) et d'oxyde de chrome $Cr_2O_3$ (18,6 g) que l'on introduit dans un autoclave avec 24 ml de $CS_2$. On ferme l'autoclave et on chauffe à 400°C pendant 10 heures. La pression interne est alors d'environ 4,2 MPa.

Après réaction, le solide L1 obtenu est filtré, lavé à l'eau distillée, séché à 40°C. L'analyse chimique du solide L1 conduit à la formule suivante pour la forme anhydre et débarrassée du composé organique $V_{0,59}Cr_{2,41}S_{3,86}$.

De la même manière que précédemment on prépare un échantillon de sulfure de chrome en ajoutant dans l'autoclave, 22,6 g d'oxyde de chrome et 24 ml de $CS_2$. On obtient ainsi le solide L2 de composition $Cr_{2,9}S_{3,9}$ déterminée par analyse chimique.

Exemple 18

Préparation du sulfure mixte de niobium et de molybdène contenant du nickel conforme à l'invention

Le produit G1 tel que décrit dans l'exemple 12 est imprégné à sec par une solution de nitrate de nickel et enfin séché sous air à 80°C. La composition du solide M1 obtenu est $Nb_{0,35}Mo_{0,545}Ni_{0,09}S_{1,92}$.

Exemple 19

Préparation du sulfure mixte de niobium et de molybdène contenant du ruthénium conforme à l'invention

Le produit G1 tel que décrit dans l'exemple 12 est imprégné à sec par une solution de chlorure de ruthénium et enfin séchés sous air à 80°C. La composition du solide N1 obtenu est $Nb_{0,35}Mo_{0,545}Ru_{0,1}S_{1,94}$.

Exemple 20

Préparation du sulfure mixte de niobium et de molybdène exfolié conforme à l'invention

Le produit G1 tel que décrit dans l'exemple 12 est mis en suspension dans une solution d'hexane, contenant du butyllithium. On utilise , 1,9 g de butyllithium pour 10 g de solide G1. Le solide résultant est récupéré par filtration et ensuite mouillé par l'eau afin de désintercaler le lithium. La phase sulfure mixte exfoliée O1 peut ensuite être récupérée par filtration et séchage à 80°C.

Exemple 21

Test en HDS du dibenzothiophène

Les catalyseurs supportés sur alumine, A1, B1, D1 à D6, précédemment décrits et sulfurés par la méthode Si ou S2 ont été comparés en test d'hydrodésulfuration du dibenzothiophène dans un réacteur à lit fixe traversé sous pression d'hydrogène dans les conditions opératoires suivantes :

| | |
|---|---|
| Pression totale | 3,3MPa |
| Pression de DBT | 485Pa |
| Débit d' hydrogène | 84 cm$^3$ /h |
| Masse de catalyseur | 20-50 mg |
| Pression d'$H_2$S | 25,3kPa |
| Température | 300°C |

Les performances catalytiques sont données dans le tableau 6 ci-après. Elles sont exprimées en activité relative par rapport à l'activité spécifique en mole de DBT convertie par g de catalyseur et par heure du catalyseur de référence A1.

TABLEAU 6

| Activité des catalyseurs supportés en hydrodésulfuration du dibenzothiophène | |
|---|---|
| Catalyseur | Activité relative à A1 |
| A1-S1 | 1 |
| D1-S1 | 3 |
| D2-S1 | 3,4 |
| D4-S1 | 4,7 |
| D5-S1 | 5,3 |
| D6-S1 | 5 |
| B1-S1 | 3,0 |
| A1-S2 | 1,1 |
| D1-S2 | 1,1 |
| D2-S2 | 0,9 |
| D4-S2 | 1,1 |
| D5-S2 | 1,2 |
| D6-S2 | 1,0 |
| B1-S2 | 1,0 |

Lorsqu'ils sont sulfurés par la méthode S2, les catalyseurs contenant à la fois du niobium et du molybdène (D1, D2, D4, D5 et D6) sont plus actifs que le catalyseur contenant le molybdène seul (Al) ou le niobium seul (B1). Si le molybdène et le niobium sont introduits simultanément (D1, D2, D4, D5, D6), on note une activité très supérieure à la somme des activités des deux éléments pris séparément (A1+B1). Ceci montre que la formation d'une phase sulfure mixte de niobium et de molybdène est bénéfique pour l'activité du catalyseur.

La sulfuration par $H_2S$ (méthode S2) donne une meilleure activité pour le catalyseur ne contenant que le molybdène (A1). Avec cette méthode de sulfuration tous les catalyseurs contenant du niobium sont moins actifs par rapport aux catalyseurs sulfurés par la méthode S1.

Les catalyseurs massiques G1 à G3, H1, I1 et I2, J1 et J2, K1 et K2, L1 et L2 et M1, précédemment décrits et sulfurés par la méthode Si ont été comparés en test d'hydrodésulfuration du dibenzothiophène dans un réacteur à lit fixe traversé sous pression d'hydrogène dans les conditions opératoires déjà indiquées ci dessus. Les performances catalytiques sont données dans le tableau 7 ci-après. Elles sont exprimées en activité relative par rapport à l'activité spécifique en mole de DBT convertie par g de catalyseur et par heure du catalyseur de référence G3, $MoS_2$.

TABLEAU 7

| Activité des catalyseurs massiques en hydrodésulfuration du dibenzothiophène | |
|---|---|
| Catalyseur | Activité relative à G3 |
| G1-S1 | 3 |
| G2-S1 | 0,8 |
| G3-S1 | 1 |
| H1-S1 | 3,5 |
| I1-S1 | 2,1 |
| I2-S1 | 0,9 |
| J1-S1 | 1,8 |
| J2-S1 | 0,2 |
| K1-S1 | 2,5 |

TABLEAU 7   (suite)

| Activité des catalyseurs massiques en hydrodésulfuration du dibenzothiophène | |
| --- | --- |
| Catalyseur | Activité relative à G3 |
| K2-S1 | 0,4 |
| L1-S1 | 1,3 |
| L2-S1 | 0,15 |
| M1-S1 | 7 |
| N1-S1 | 12 |
| O1-S1 | 10 |

On observe que les sulfures mixtes sont plus actifs que les sulfures simples des éléments du groupe VB et VIB le constituant. Ainsi le sulfure mixte de molybdène et niobium G1 est plus actif que le sulfure de niobium G2 et que le sulfure de molybdène G3. Le sulfure mixte de niobium et tungstène II est plus actif que le sulfure de niobium G2 et que le sulfure de tungstène I2. Le sulfure mixte de tantale et de molybdène J1 est plus actif que le sulfure de tantale J2 et que le sulfure de molybdène G3. Le sulfure mixte de vanadium et de molybdène K1 est plus actif que le sulfure de vanadium K2 et que le sulfure de molybdène G3. Le sulfure mixte de vanadium et de chrome L1 est plus actif que le sulfure de vanadium K2 et que le sulfure de chrome L2.

On observe également que le nickel a un effet promoteur sur l'activité en désulfuration du dibenzothiophène de la phase mixte de sulfure de niobium et de molybdène G1 car le catalyseur M1 préparé par addition du nickel sur le catalyseur G1 est plus actif que le catalyseur G1.

De même on observe que le ruthénium a un effet promoteur sur l'activité en désulfuration du dibenzothiophène de la phase mixte de sulfure de niobium et de molybdène G1 car le catalyseur N1 préparé par addition du ruthénium sur le catalyseur G1 est plus actif que le catalyseur G1.

Enfin la phase mixte de sulfure de niobium et de molybdène exfoliée O1 est plus active en désulfuration du dibenzothiophène que la phase mixte de sulfure de niobium et de molybdène G1.

Exemple 22

Test en HDS de gas-oil des catalyseurs supportés

Le catalyseur de la présente invention peut être avantageusement employé pour l'hydrodésulfuration de coupes de type gazole afin d'en réduire la teneur en soufre et de satisfaire aux normes de teneur en soufre. Les charges hydrocarbonées traitées ont des points d'ébullition initiaux d'au moins 80°C, et plus avantageusement c'est une coupe bouillant entre 150 et 480°C.

Dans ce mode d'hydrotraitement souvent appelé hydrodésulfuration de gazole, le catalyseur selon l'invention est employé à une température en général supérieure ou égale à 250°C, généralement d'au plus 450°C, et souvent comprise entre 280°C et 430°C. La pression est en général supérieure à 0,2MPa et de préférence supérieure à 0,5 MPa. La quantité d'hydrogène est au minimum de 80 normaux litre d'hydrogène par litre de charge et souvent comprise entre 80 et 1000 normaux litre d'hydrogène par litre de charge. La vitesse volumique horaire est comprise en général entre 0,1 et 20h$^{-1}$ et de préférence 0,5-15h$^{-1}$. Dans ces conditions, les catalyseurs de la présente invention contenant du une phase sulfure mixte associant un élément du groupe VB et un élément du groupe VIB sont meilleurs que les catalyseurs contenant ces éléments mais pas de phase mixte comme le montre l'exemple ci-dessous.

Les catalyseurs supportés précédemment décrits ont également été comparés en test d'hydrodésulfuration de gas-oil dont les principales caractéristiques sont données dans le tableau suivant :

| Densité à 15°C | 0,856 |
| --- | --- |
| Indice de Réfraction à 20°C | 1,4564 |
| Viscosité à 50°C | 3,72 cSt |
| Soufre | 1,57%poids |
| Distillation Simulée | |
| PI | 153°C |
| 5% | 222°C |

(suite)

| | |
|---|---|
| 50% | 315°C |
| 95% | 415°C |
| PF | 448°C |

Le test d'HDS de gas-oil est mené dans les conditions opératoires suivantes :

| | |
|---|---|
| Pression totale | 3 MPa |
| Volume de catalyseur | 40 cm$^3$ |
| Température | 340°C |
| Débit d'hydrogène | 20 l/ h |
| Débit de charge | 80 cm$^3$/h |

Chacun des catalyseurs est sulfuré avant le test par un mélange gas-oil/DMDS jusqu'à 350°C. Les performances catalytiques des catalyseurs testés sont données dans le tableau 8 suivant. Elles sont exprimées en activité, en posant que celle du catalyseur C1 est égale à 1 et en considérant qu'elle est d'ordre 1,5. La relation liant l'activité et la conversion (%HDS) est la suivante :

$$\text{Activité} = \left[\frac{100}{(100\text{-}\%HDS)}\right]^{0,5} -1$$

TABLEAU 8

| Activité des catalyseurs en hydrodésulfuration de gas-oil | |
|---|---|
| Catalyseur | Activité relative à C1 |
| A0 | 100 |
| A1 | 10 |
| B1 | 5 |
| B2 | 1,85 |
| C1 | 1 |
| C2 | 0,32 |
| D2 | 175 |
| E | 230 |
| F1 | 85 |
| F2 | 68 |

A forte teneur en métal, le catalyseur ne contenant que du molybdène (Al) est environ 2 fois plus actif que le catalyseur ne contenant que du niobium (B1) et environ 10 fois plus que le catalyseur ne contenant que du nickel (C1). Si la teneur en métal est divisée par un facteur trois environ, l'activité est également divisée environ par un facteur trois tant pour le niobium (B1 et B2) que pour le nickel (C1 et C2). Si le molybdène et le niobium sont introduits simultanément (D2), on note une activité très supérieure à la somme des activités des deux éléments pris séparément (A1+B2). Si au catalyseur D2, on ajoute dans une deuxième étape le nickel (E), l'activité résultante est supérieure à la somme des activités des deux catalyseurs pris séparément (D2+C2). Enfin, on notera que si les trois éléments sont introduits les uns après les autres avec un séchage et une calcination intermédiaire entre chaque étape (F1 et F2), l'activité résultante est supérieure à la somme des activités des catalyseurs pris séparément (A1+B1+C1) mais est très inférieure à l'activité du catalyseur pour lequel les trois éléments sont introduits simultanément et qui a été seulement séché (D2). Ceci montre bien que la calcination des catalyseurs contenant l'élément du groupe VB empêche de sulfurer ceux-ci d'une manière satisfaisante pour obtenir une bonne activité.

Exemple 23

Tests d'hydrogénation d'aromatique dans les gazoles

Le catalyseur de la présente invention peut être avantageusement employé pour l'hydrogénation des aromatiques de diverses coupes hydrocarbonées à faible teneur en soufre et par exemple préalablement déjà hydrodésulfurées. Les charges traitées sont des charges dont le point initial de distillation est supérieur à 80°C et inférieur à 580°C. Elle contiennent 1 à 2000 ppm en poids de soufre et de préférence 2 à 1500 ppm S. Ce type d'hydrotraitement est particulièrement intéressant pour réduire la teneur en aromatique dans les charges de type gazole léger et lourds.

Dans ce mode d'hydrotraitement, le catalyseur selon l'invention est alors employé à une température en général supérieure ou égale à 280°C, généralement d'au plus 420°C, et souvent comprise entre 300°C et 400°C. La pression est en général supérieure à 1MPa, et de préférence supérieure à 3 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et $10h^{-1}$ et de préférence 0,2-$5h^{-1}$. Dans ces conditions, les catalyseurs de la présente invention contenant du une phase sulfure mixte associant un élément du groupe VB et un élément du groupe VIB sont meilleurs que les catalyseurs contenant ces éléments mais pas de phase mixte comme le montre l'exemple ci-dessous.

Les catalyseurs A0, E, F1 et F2 de type NiMo et NiMoNb supportés sur alumine ont été comparés en test d'hydrogénation d'aromatiques dans un gazole. La charge de test est un gazole de craqueur catalytique fluide ou LCO préalablement désulfuré de manière à ne contenir qu'une faible teneur en soufre. Les principales caractéristiques de ce gazole désulfuré sont données dans le tableau suivant :

| Densité à 20°C | 0,904 |
|---|---|
| Soufre (ppm) | 109 |
| Azote (ppm) | 132 |
| D86 (°C) | |
| PI | 166 |
| 10% | 210 |
| 50% | 266 |
| 90% | 343 |
| PF | 415 |
| Aromatiques (%pds) | |
| Total | 74 |
| Mono | 44 |
| Di | 27 |
| Tri | 3 |
| CA par RMN | 43 |

On notera dans ce tableau que le gazole désulfuré ne contient que 109 ppm de soufre, une teneur en azote importante à 132 ppm et une teneur en aromatique très importante.

Le test d'hydrogénation d'aromatique est mené dans une unité pilote en lit fise traversé fonctionnant en mode "upflow" c'est à dire que la charge circule de bas en haut dans les conditions opératoires suivantes :

| Pression totale | 9 MPa |
|---|---|
| Volume de catalyseur | 40 cm³ |
| Température | 340°C |
| Débit d'hydrogène | 40 l/ h |
| Débit de charge | 40 cm³/h |

Chacun des catalyseurs est sulfuré avant le test à 350°C, et à une pression totale de 9MPa par le gazole décrit ci-dessus auquel on a ajouté 2% en poids de diméthyl-disulfure (DMDS).

Les performances catalytiques des catalyseurs testés sont données dans le tableau 9 suivant.

Pour chaque expérience, nous avons mesuré la densité de l'effluent liquide à 20°C, la teneur en CA (Carbone Aromatique mesuré par RMN) de l'effluent et la teneur initiale $CA_0$ de la charge. A partir du CA de la charge et du CA de l'effluent, nous avons calculé la conversion des aromatiques (% HAR) puis l'activité hydrogénante en admettant qu'elle est d'un ordre 1.

$$A_{HAR} = Ln(\frac{100}{(100-\%HAR)})$$

Nous avons également déterminé l'activité en hydrodésulfuration. L'activité est calculée en considérant que la réaction est d'ordre 1,5. La relation liant l'activité et la conversion (%HDS) est alors la suivante :

$$A_{HDS} = [\frac{100}{(100-\%HDS)}]^{0,5} -1$$

Nous avons également déterminé l'activité en hydrodéazotation. L'activité est calculée en considérant que la réaction est d'ordre 1. La relation liant l'activité et la conversion en produit azoté (%HDN) est alors la suivante :

$$A_{HDN} = Ln(\frac{100}{(100-\%HDN)})$$

Dans le tableau 9, les activités sont exprimées en activité relative, en posant que celle du catalyseur A0 est égale à 1.

TABLEAU 9

| Activité des catalyseurs en hydrogénation d'aromatique dans un gazole désulfuré | | | |
|---|---|---|---|
| Catalyseur | $A_{HDS}$ relative au catalyseur A0 | $A_{HDN}$ relative au catalyseur A0 | A HAR relative au catalyseur A0 |
| A0 (NiMo/alumine) | 1 | 1 | 1 |
| E (Nb+Mo)+Ni)/alumine | 1,2 | 1,25 | 1,27 |
| F1 (Mo+Nb+Ni/alumine | 0,96 | 0,97 | 0,95 |
| F2 (Mo+Nb+Ni)/alumine | 0,85 | 0,83 | 0,86 |

Les résultats du tableau 9 indiquent que les catalyseurs F1 et F2, non conforme à l'invention, dont il a été montré dans l'exemple 11 qu'il ne contenait pas de phase sulfure mixte associant le Mo et le Nb présentent des activités inférieures (cas de F2) ou au mieux équivalentes ( cas de F1) à celles du catalyseur A0 NiMo/alumine ne contenant pas de niobium. Le catalyseur E contenant une phase sulfure mixte associant le Mo et le Nb comme indiqué dans l'exemple 11 présente par contre une activité meilleure pour les trois réactions, HDS, HDN et hydrogénation que le catalyseur A0 et que les catalyseurs F1 et F2 de compositions très proches. Cette meilleure activité provient probablement de la modification de la réactivité de la phase sulfure du sulfure de molybdène lorsque l'on introduit du niobium dans sa structure. Cet exemple montre également qu'il ne faut pas calciner les catalyseurs contenant l'élément du groupe VB.

Le catalyseur E contenant du molybdène et du niobium dans une phase sufure mixte de structure bien définie et contenant du nickel est donc particulièrement intéressant pour une utilisation dans des procédés d'hydrotraitement de charges de type distillats déjà désulfurées jusqu'à des teneurs en soufre inférieure à 700 ppm dans le but soit d'en diminuer la teneur en soufre, ou d'en diminuer la teneur en azote ou encore d'en réduire la teneur en aromatique.

Exemple 24

Test en hydrotraitement d'un distillat sous vide

Le catalyseur de la présente invention peut être avantageusement employé pour l'hydrotraitement de coupes de type distillats sous vide fortement chargées en soufre et azote afin d'en réduire les teneurs en soufre et surtout en azote. Les charges hydrocarbonées traitées ont des points d'ébullition initiaux d'au moins 250°C, de préférence au moins 300°C, et plus avantageusement c'est une coupe bouillant entre 330°C et 650°C. Ce type d'hydrotraitement est particulièrement intéressant pour prétraiter les charges destinées à un hydrocraqueur employant un ou des catalyseurs zéolithiques, les charges destinées au craqueur catalytique fluide, et effectuer l'hydroraffinage de coupes huiles.

Dans ce mode d'hydrotraitement encore parfois appellé prétraitement des charges d'hydrocraquage, prétraitement des charges de FCC ou hydroraffinage d'huiles, le catalyseur selon l'invention est employé à une température en général supérieure ou égale à 300°C, généralement d'au plus 450°C, et souvent comprise entre 340°C et 440°C. La pression est en général supérieure à 2MPa et de préférence supérieure à 5 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 5h$^{-1}$ et de préférence 0,2-4h$^{-1}$. Dans ces conditions, les catalyseurs de la présente invention contenant du une phase sulfure mixte associant un élément du groupe VB et un élément du groupe VIB sont meilleurs que les catalyseurs contenant ces éléments mais pas de phase mixte comme le montre l'exemple ci-dessous.

Les catalyseurs A0, E, F1 et F2 de type NiMo et NiMoNb supportés sur alumine ont été comparés en test d'hydrotraitement d'un distillat sous vide dont les principales caractéristiques sont données dans le tableau suivant :

| Densité à 15°C | 0,938 |
|---|---|
| Soufre | 3,12%poids |
| Azote total | 1050 ppm poids |
| Distillation Simulée | |
| PI | 345°C |
| 10% | 412 °C |
| 50% | 488°C |
| 90% | 564°C |
| PF | 615°C |

Le test est mené dans un réacteur pilote isotherme à lit fixe traversé, les fluides circulant de bas en haut. Après sulfuration in situ à 350°C dans l'unité sous pression au moyen d'un gazole de distillation directe auquel est additionné 2% poids de diméthyldisulfure, le test d'hydrotraitement a été conduit dans les conditions opératoires suivantes :

| Pression totale | 12 MPa |
|---|---|
| Volume de catalyseur | 40 cm$^3$ |
| Température | 380°C |
| Débit d'hydrogène | 24 l/ h |
| Débit de charge | 20 cm$^3$ /h |

Les performances catalytiques des catalyseurs testés sont données dans le tableau 10 suivant. Elles sont exprimées en activité relative, en posant que celle du catalyseur A0 est égale à 1 et en considérant qu'elles sont d'ordre 1,5. La relation liant l'activité et la conversion en hydrodésulfuration (%HDS) est la suivante :

$$A_{HDS} = [\frac{100}{(100-\%HDS)}]^{0,5} -1$$

La même relation est applicable pour l'hydrodéazotation (% HDN et $A_{HDN}$).

Par ailleurs, on évalue également la conversion nette de la fraction de la charge ayant un point d'ébullition supérieur à 380°C (% 380°C+ en poids) obtenue avec chaque catalyseur. Elle est exprimée à partir des résultats de distillation simulée (méthode ASTM D86) par la relation :

$$Conv\ 380°C^+ = \frac{(\%380°C+)recette-(\%380°C+)charge}{(\%380°C+)charge}$$

TABLEAU 10

| Activité des catalyseurs NiMo en hydrotraitement de distillat sous vide | | | |
|---|---|---|---|
| Catalyseur | $A_{HDS}$ relative au catalyseur A0 | AHDN relative au catalyseur A0 | Conv 380°C+ (%) |
| A0 (NiMo/alumine) | 1 | 1 | 30 |
| E (Nb+Mo)+Ni)/alumine | 1,3 | 1,36 | 38 |
| F1 (Mo+Nb+Ni)/alumine | 0,95 | 1,05 | 32 |
| F2 (Mo+Nb+Ni)/alumine | 0,92 | 0,96 | 31 |

Les résultats du tableau 10 indiquent que les catalyseurs F1 et F2, non conforme à l'invention, dont il a été montré dans l'exemple 11 qu'il ne contenait pas de phase sulfure mixte associant le Mo et le Nb présentent des activités inférieures (cas de F2) ou au mieux équivalentes ( cas de F1) à celles du catalyseur A0 NiMo/alumine ne contenant pas de niobium.

Le catalyseur E contenant une phase sulfure mixte associant le Mo et le Nb comme indiqué dans l'exemple 11 et donc obtenu selon les méthodes de l'invention à de meilleures performances en hydrodésulfuration, en hydrodéazotation et en conversion de la fraction 380°C+ en coupe légère bouillant à une température inférieure à 380°C que le catalyseur A0 et que les catalyseurs F1 et F2 de compositions très proches. Cette meilleure activité provient probablement de la modification de la réactivité de la phase sulfure du sulfure de molybdène lorsque l'on introduit du niobium dans sa structure.

Le catalyseur E contenant du molybdène et du niobium dans une phase sufure mixte de structure bien définie et contenant du nickel est donc particulièrement intéressant pour une utilisation dans des procédés d'hydrotraitement visant à prétraiter les charges d'hydrocraquage de type distillats sous vide car l'activité améliorée en hydrodéazotation permet d'obtenir une charge d'hydrocraquage ayant une plus faible teneur en azote.

Le catalyseur E contenant du molybdène et du niobium dans une phase sufure mixte de structure bien définie et contenant du nickel est donc particulièrement intéressant pour une utilisation dans des procédés d'hydrotraitement visant à prétraiter les charges de craquage catalytique de type distillats sous vide car l'activité améliorée en hydrodésulfuration, en hydrodéazotation et en conversion permet d'obtenir une charge de craqueur catalytique plus réactive.

Le catalyseur E contenant du molybdène et du niobium dans une phase sufure mixte de structure bien définie et contenant du nickel est également particulièrement intéressant pour une utilisation dans des procédés d'hydroraffinage car l'activité améliorée en hydrodésulfuration, en hydrodéazotation et en conversion permet d'obtenir des huiles techniques ou médicinales aux spécifications.

Exemple 25

Tests d'hydrocraquage partiel d'un distillat sous vide

Le catalyseur de la présente invention peut être employé avantageusement pour l'hydrocraquage partiel de diverses coupes hydrocarbonées, par exemple de coupes de type distillats sous vide fortement chargée en soufre et azote. Les charges hydrocarbonées traitées ont des points d'ébullition initiaux d'au moins 150°C, de préférence au moins 300°C, et plus avantageusement c'est une coupe bouillant entre 330 et 650°C.

Dans ce mode d'hydrocraquage partiel encore parfois appellé hydrocraquage doux, le niveau de conversion est inférieur à 55%. Le catalyseur selon l'invention est alors employé à une température en général supérieure ou égale à 350°C, généralement d'au plus 480°C, et souvent comprise entre 360°C et 460°C, de préférence 360-450°C. La pression est en général supérieure à 2Mpa et de préférence supérieur à 5 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et $5h^{-1}$ et de préférence $0,1-4h^{-1}$. Dans ces conditions, les catalyseurs de la présente invention contenant du une phase sulfure mixte associant un élément du groupe VB et un élément du groupe VIB sont meilleurs que les catalyseurs contenant ces éléments mais pas de phase mixte comme le montre l'exemple ci-dessous.

Les catalyseurs A0, E, F1 et F2 de type NiMo et NiMoNb supportés sur alumine sont utilisés dans les conditions de l'hydrocraquage doux sur une charge pétrolière de type distillats sous vide à forte teneur en soufre et en azote dont les principales caractéristiques sont les suivantes :

| Densité à 15°C | 0,921 |
|---|---|
| Soufre | 2,46%poids |
| Azote total | 1130 ppm poids |
| Distillation Simulée | |
| PI | 365 °C |
| 10% | 430 °C |
| 50% | 472 °C |
| 90% | 504 °C |
| PF | 539 °C |

L'unité de test catalytique comprend un réacteur en lit fixe, à circulation ascendante de la charge ("up-flow"). Le test d'hydrocraquage partiel est mené dans les conditions opératoires suivantes :

| Pression totale | 5 MPa |
|---|---|
| Volume de catalyseur | 40 cm$^3$ |
| Température | 380 à 420°C |
| Débit d'hydrogène | 10 l/ h |
| Débit de charge | 20 cm$^3$/h |

Chacun des catalyseurs est sulfuré avant le test à 350°C, et à une pression totale de 5MPa par le gazole décrit dans l'exemple 23 auquel on a ajouté 2% en poids de diméthyl-disulfure (DMDS).

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{moins}} \text{ de l'effluent}$$

La sélectivité brute SB en distillats moyens est prise égale à :

$$SB = 100*\text{poids de la fraction } (150°C\text{-}380°C)/\text{poids de la fraction } 380°C^{\text{moins}} \text{ de l'effluent}$$

La conversion en hydrodésulfuration HDS est prise égale à :

$$HDS = (S_{\text{initial}} - S_{\text{effluent}}) / S_{\text{initial}} * 100 = (24600 - S_{\text{effluent}}) / 24600 * 100$$

La conversion en hydrodéazotation HDN est prise égale à :

$$HDN = (N_{\text{initial}} - N_{\text{effluent}}) / N_{\text{initial}} * 100 = (1130 - N_{\text{effluent}}) / 1130 * 100$$

Dans le tableau 11 suivant, nous avons reporté la conversion brute CB à 400°C, la sélectivité brute SB, la conversion en hydrodésulfuration HDS et la conversion en hydrodéazotation HDN pour les catalyseurs testés dans ces conditions.

TABLEAU 11

| Activité des catalyseurs en hydrocraquage doux d'un distillat sous vide | | | | |
|---|---|---|---|---|
| | CB (%pds) | SB (%) | HDS (%) | HDN (%) |
| A0 (NiMo/alumine) | 38,2 | 82,6 | 97,6 | 90,3 |

TABLEAU 11   (suite)

| Activité des catalyseurs en hydrocraquage doux d'un distillat sous vide | | | | |
|---|---|---|---|---|
| | CB (%pds) | SB (%) | HDS (%) | HDN (%) |
| E (Nb+Mo)+Ni)/alumine | 42,1 | 82,2 | 98,7 | 93,3 |
| F1 (Mo+Nb+Ni)/alumine | 38,3 | 82,4 | 97,3 | 91,2 |
| F2 (Mo+Nb+Ni)/alumine | 37,8 | 82,8 | 96,5 | 89,3 |

Les résultats du tableau 11 indiquent que les catalyseurs F1 et F2, non conforme à l'invention, dont il a été montré dans l'exemple 11 qu'il ne contenait pas de phase sulfure mixte associant le Mo et le Nb présentent des activités inférieures (cas de F2) ou au mieux équivalentes ( cas de F1) à celles du catalyseur A0 NiMo/alumine ne contenant pas de niobium. Le catalyseur E contenant une phase sulfure mixte associant le Mo et le Nb comme indiqué dans l'exemple 11 présente par contre une activité meilleure pour les trois réactions, HDS, HDN et conversion de la fraction 380°C plus en fraction 380°C moins, ce qui est difficile à réaliser sur ce type de charge à forte teneur en soufre, que le catalyseur A0 et que les catalyseurs F1 et F2 de compositions très proches. On observe également dans le tableau 11 que la sélectivité brute reste équivalente. Cette meilleure activité provient probablement de la modification de la réactivité de la phase sulfure du sulfure de molybdène lorsque l'on introduit du niobium dans sa structure.

Le catalyseur E contenant du molybdène et du niobium dans une phase sufure mixte de structure bien définie et contenant du nickel est donc particulièrement intéressant pour une utilisation dans des procédés d'hydrotraitement convertissant de charges de type distillats sous vide à forte teneur en soufre et en azote, généralement dénommé hydrocraquage doux ou partiel, à une pression d'hydrogène modérée.

Exemple 26

Tests d'hydrocraquage d'un distillat sous vide à haute conversion

Le catalyseur de la présente invention peut être aussi avantageusement employé pour l'hydrocraquage de diverses coupes hydrocarbonées, par exemple de coupes de type distillats sous vide fortement chargée en soufre et azote. Les charges hydrocarbonées traitées ont des points d'ébullition initiaux d'au moins 150°C, de préférence au moins 300°C, et plus avantageusement c'est une coupe bouillant entre 330 et 650°C.

Dans ce mode d'hydrocraquage le niveau de conversion est supérieur à 55%. Les conditions opératoires sont généralement une température de 350-460°C, de préférence 360-450°C, une pression supérieure à 5 MPa, et de préférence supérieure à 8 MPa, une vitesse volumique horaire de 0,1 à 5 h $^{-1}$ et de préférence 0,1-4h$^{-1}$ et avec une quantité d'hydrogène d'au moins 100Nl/l de charge, et de préférence 200-3000Nl/l de charge. Dans ces conditions, les catalyseurs de la présente invention contenant du une phase sulfure mixte associant un élément du groupe VB et un élément du groupe VIB sont meilleurs que les catalyseurs contenant ces éléments mais pas de phase mixte comme le montre l'exemple ci-dessous.

Les catalyseurs A0, E, F1 et F2 de type NiMo et NiMoNb supportés sur alumine sont utilisés dans les conditions de l'hydrocraquage à haute conversion (60-100%) sur une charge pétrolière de type distillats sous vide à forte teneur en soufre et en azote dont les principales caractéristiques sont les suivantes :

| | |
|---|---|
| Densité à 15°C | 0,912 |
| Soufre | 2,22%poids |
| Azote total | 598 ppm poids |
| Distillation Simulée | |
| PI | 345 °C |
| 10% | 375°C |
| 50% | 402 °C |
| 90% | 428°C |
| PF | 467 °C |

L'unité de test catalytique comprend un réacteur en lit fixe, à circulation ascendante de la charge ("up-flow"). Le test d'hydrocraquage est mené dans les conditions opératoires suivantes :

| Pression totale | 20 MPa |
| Volume de catalyseur | 40 cm$^3$ |
| Température | 380 à 420°C |
| Débit d'hydrogène | 24 l/ h |
| Débit de charge | 20 cm$^3$ /h |

Chacun des catalyseurs est sulfuré avant le test à 350°C, et à une pression totale de 20MPa par la charge à laquelle on a ajouté 2% en poids de diméthyl-disulfure (DMDS).

Dans ces conditions, les performances catalytiques en hydrodésulfuration (HDS) et en hydrodéazotation (HDN) sont telles que les teneurs en soufre (S< 10 ppm) et en azote (N<2 ppm) dans l'effluent sont inférieure à la limite de détection des techniques d'analyse standard. Cette observation est normale compte tenu de la haute pression d'hydrogène employée. On s'intéresse alors principalement l'activité en conversion de la fraction 380°C$^{plus}$ c'est à dire à la conversion brute (CB). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C \text{ }^{moins} \text{ de l'effluent}$$

Dans le tableau 12 suivant, nous avons reporté la conversion brute CB à 410°C pour les catalyseurs testés dans ces conditions.

TABLEAU 12

| Activité des catalyseurs en hydrocraquage haute pression d'un distillat sous vide | |
|---|---|
| | CB (%pds) |
| A0 (NiMo/alumine) | 65,2 |
| E (Nb+Mo)+Ni) /alumine | 73,4 |
| F1 (Mo+Nb+Ni)/alumine | 65,2 |
| F2 (Mo+Nb+Ni) /alumine | 63,3 |

Les résultats du tableau 12 indiquent que les catalyseurs F1 et F2, non conforme à l'invention, dont il a été montré dans l'exemple 11 qu'il ne contenait pas de phase sulfure mixte associant le Mo et le Nb présentent des activités inférieures (cas de F2) ou au mieux équivalentes ( cas de F1) à celles du catalyseur A0 NiMo/alumine ne contenant pas de niobium. Le catalyseur E contenant une phase sulfure mixte associant le Mo et le Nb comme indiqué dans l'exemple 11 présente par contre une activité meilleure pour la conversion de la fraction 380°C plus en fraction 380°C moins, ce qui est difficile à réaliser sur ce type de charge à forte teneur en soufre que le catalyseur A0 et que les catalyseurs F1 et F2 de compositions très proches. Cette meilleure activité provient probablement de la modification de la réactivité de la phase sulfure du sulfure de molybdène lorsque l'on introduit du niobium dans sa structure.

Le catalyseur E contenant du molybdène et du niobium dans une phase sufure mixte de structure bien définie et contenant du nickel est donc particulièrement intéressant pour une utilisation dans des procédés d'hydrocraquage de charges de type distillats sous vide à forte teneur en soufre et en azote, généralement dénommé hydrocraquage à l'aide de catalyseur amorphe, à une pression d'hydrogène élevée.

**Revendications**

1. Catalyseur comprenant au moins un sulfure mixte comprenant du soufre et au moins un élément du groupe VB de la Classification périodique des éléments, tels que le tantale, le niobium et le vanadium, et au moins un élément du groupe VIB de ladite Classification, tels que le chrome, le molybdène et le tungstène.

2. Catalyseur selon la revendication 1 tel que l'élément du groupe VB est le niobium.

3. Catalyseur selon l'une des revendications 1 ou 2 tel que l'élément du groupe VIB est le molybdène ou le tungstène.

**4.** Catalyseur selon l'une des revendications 1 à 3 tel que l'élément du groupe VIB est le molybdène.

**5.** Catalyseur selon l'une des revendications 1 à 4 comprenant un sulfure mixte de niobium et de molybdène.

**6.** Catalyseur selon l'une des revendications 1 à 5 comprenant un sulfure mixte de formule générale approchée suivante :

$$A_x\ B_{1-x}\ S_y$$

où :

x est un nombre compris entre 0,001 et 0,999,
y est un nombre compris entre 0,1 et 8,
A est l'élément du groupe VB,
B est l'élément choisi dans le groupe VIB.

**7.** Catalyseur selon l'une des revendications 1 à 6 comprenant un sulfure mixte de formule générale approchée suivante :

$$A_x\ B_{1-x}\ S_y$$

où :

x est un nombre compris entre 0,05 et 0,95,
y est un nombre compris entre 0,5 et 4,
A est un élément du groupe VB,
B est un élément choisi dans le groupe VIB.

**8.** Catalyseur selon l'une des revendications 1 à 6 comprenant au moins un élément du groupe VIII de la classification périodique des éléments.

**9.** Catalyseur selon la revendication 8 tel que ledit métal du groupe VIII est choisi dans le groupe formé par le fer, le cobalt et le nickel.

**10.** Catalyseur selon l'une des revendications 1 à 8 comprenant un support.

**11.** Catalyseur selon la revendication 9 tel que ledit support est une matrice.

**12.** Catalyseur selon la revendication 10 tel que ladite matrice est l'alumine.

**13.** Catalyseur selon l'une des revendications 1 à 12 tel que ledit sulfure mixte a été intercalé par du lithium puis désintercalé.

**14.** Catalyseur selon l'une des revendications 1 à 13 comprenant au moins un élément choisi dans le groupe formé par le phosphore, le bore et le silicium.

**15.** Catalyseur selon l'une des revendications 1 à 14 comprenant au moins un élément du groupe VIIA.

**16.** Catalyseur selon la revendication 15 tel que ledit élément est le fluor.

**17.** Catalyseur selon l'une des revendications 1 à 16 qui est sous forme massique et qui renferme, en % poids par rapport à la masse totale du catalyseur

• 0,01 à 100 % d'au moins un sulfure mixte,

le catalyseur pouvant renfermer en outre :

- 0 à 99,99 % d'au moins un métal du groupe VIII,
- 0 à 20 % d'au moins un élément choisi dans le groupe formé par les éléments Si, P et B, et
- 0 à 15 % d'au moins un élément choisi dans le groupe VIIA.

18. Catalyseur selon l'une des revendications 1 à 16 qui est supporté et qui renferme, en % poids par rapport à la masse totale du catalyseur :

- 0,1 à 99,5 % d'au moins une phase sulfure mixte,
- 0,5 à 99,9 % d'au moins un support,

le catalyseur pouvant renfermer en outre

- 0 à 30 % d'au moins un métal du groupe VIII
- 0 à 20 % d'au moins un élément choisi dans le groupe formé par les éléments Si, P et B, et
- 0 à 15 % d'au moins un élément choisi dans le groupe VIIA.

19. Catalyseur selon l'une des revendications 1 à 16 qui est supporté et qui renferme, en % poids par rapport à la masse totale du catalyseur :

- 1 à 99,9 % d'au moins une matrice,
- 0,1 à 99 % d'au moins une phase sulfure mixte d'au moins un métal du groupe VB et d'au moins un métal du groupe VIB,
- le catalyseur pouvant renfermer en outre :

  - 0 à 30 % d'au moins un métal du groupe VIII, 0 à 20 % d'au moins un élément choisi dans le groupe formé par les éléments Si, P et B, et
  - 0 à 15 % d'au moins un élément choisi dans le groupe VIIA.

20. Procédé de préparation du sulfure mixte compris dans le catalyseur selon l'une des revendications 1 à 19 comprenant les étapes suivantes :

a) on forme un mélange réactionnel qui renferme au moins les composés suivants : au moins une source d'élément du groupe VB, au moins une source d'élément du groupe VIB, éventuellement de l'eau, éventuellement au moins un élément choisi dans le groupe formé par les éléments du groupe VIII, éventuellement au moins une source d'un élément choisi dans le groupe formé par les éléments : P, B, et Si éventuellement au moins une source d'un élément choisi parmi les éléments du groupe VIIA,
b) on maintient ledit mélange à une température de chauffage supérieure à environ 40°C, à une pression au moins égale à la pression atmosphérique et en présence d'un composé du soufre, jusqu'à ce que l'on obtienne ledit sulfure mixte.

21. Procédé selon la revendication 20 tel que l'on procède à la sulfuration du mélange à une température comprise entre 40 et 700°, sous pression autogène et en présence d'un composé gazeux du soufre.

22. Procédé selon la revendication 21 tel que ledit composé gazeux est le $CS_2$.

23. Procédé de préparation d'un sulfure mixte selon l'une des revendications 20 ou 22 dans lequel l'élément du groupe VB est le niobium et l'élément du groupe VIB est le molybdène, compris dans le catalyseur à partir d'oxyde de formule $Nb_2Mo_3O_{14}$.

24. Procédé selon la revendication 23 dans lequel l'on procède à la sulfuration sous flux d'un mélange hydrogène/ hydrogène sulfuré ou azote/hydrogène sulfuré à une température comprise entre 150 et 800°C, dans une zone réactionnelle à lit traversé.

25. Procédé de préparation d'un sulfure mixte supporté consistant à préparer une composition comprenant le support et le sulfure mixte préparé selon l'une des revendications 22 à 24.

26. Procédé de préparation d'un sulfure mixte selon la revendication 20 dans lequel le mélange réactionnel formé à l'étape a renferme en outre au moins un support choisi dans le groupe formé par les matrices et l'étape b permet d'obtenir un solide contenant au moins le support et le sulfure mixte.

**27.** Procédé selon la revendication 26 tel que l'étape a) est une étape d'imprégnation du support.

**28.** Utilisation du catalyseur selon l'une des revendications 1 à 19 en hydroraffinage ou hydrocraquage de charges hydrocarbonées, à une température supérieure à 200° C, une pression supérieure à 0,1 MPa, en présence d'hydrogène avec un taux de recyclage d'au moins 80 litres d'hydrogène par litre de charge et à une vitesse volumique horaire comprise entre 0,1 et 20 h$^{-1}$.

**29.** Utilisation selon la revendication 28 telle que la charge est choisie dans le groupe formé par les essences, les gazoles, les gazoles sous vide, les résidus désasphaltés ou non, les huiles paraffiniques, les cires et paraffines et elle peut contenir des hétéroatomes tels que soufre, oxygène et azote et au moins un métal.

**Patentansprüche**

**1.** Katalysator, der wenigstens ein gemischtes Sulfid umfasst, das Schwefel und wenigstens ein Element der Gruppe VB des Periodensystems der Elemente, wie Tantal, Niob und Vanadium und wenigstens ein Element der Gruppe VIB dieses Periodensystems wie Chrom, Molybdän und Wolfram umfasst.

**2.** Katalysator nach Anspruch 1 derart, dass das Element der Gruppe VB Niob ist.

**3.** Katalysator nach einem der Ansprüche 1 bis 2 derart, dass das Element der Gruppe VIB Molybdän oder Wolfram ist.

**4.** Katalysator nach einem der Ansprüche 1 bis 3 derart, dass das Element der Gruppe VIB Molybdän ist.

**5.** Katalysator nach einem der Ansprüche 1 bis 4, der ein gemischtes Sulfid von Niob und von Molybdän umfasst.

**6.** Katalysator nach einem der Ansprüche 1 bis 5, der ein gemischtes Sulfid der folgenden allgemeinen näherungsweisen Formel hat:

$$A_xB_{1-x}S_y$$

wobei:

x eine Zahl zwischen 0,001 und 0,999 ist,

y eine Zahl zwischen 0,1 und 8 ist,

A ein Element der Gruppe VB ist,

B ein aus der Gruppe VIB gewähltes Element ist.

**7.** Katalysator nach einem der Ansprüche 1 bis 6, der ein gemischtes Sulfid der folgenden allgemeinen näherungsweisen Formel hat:

$$A_xB_{1-x}S_y$$

wobei:

x eine Zahl zwischen 0,001 und 0,95 ist,

y eine Zahl zwischen 0,5 und 4 ist,

A ein Element der Gruppe VB ist,

B ein aus der Gruppe VIB gewähltes Element ist.

8. Katalysator nach einem der Ansprüche 1 bis 6, der wenigstens ein Element der Gruppe VIIIB des Periodensystems der Elemente umfasst.

9. Katalysator nach Anspruch 8 derart, dass das Element der Gruppe VIII aus der durch Eisen, Kobalt und Nickel gebildeten Gruppe gewählt ist.

10. Katalysator nach einem der Ansprüche 1 bis 6, der einen Träger umfasst.

11. Katalysator nach Anspruch 9 derart, dass der Träger eine Matrix ist.

12. Katalysator nach Anspruch 10 derart, dass die Matrix Aluminiumoxid ist.

13. Katalysator nach einem der Ansprüche 1 bis 12 derart, dass das gemischte Sulfid durch Lithium interkaliert und dann deinterkaliert worden ist.

14. Katalysator nach einem der Ansprüche 1 bis 13, der wenigstens ein Element umfasst, das aus der Gruppe gewählt ist, die gebildet wird durch Phosphor, Bor und Silizium.

15. Katalysator nach einem der Ansprüche 1 bis 14, der wenigstens ein Element der Gruppe VIIA umfasst.

16. Katalysator nach Anspruch 15 derart, dass dieses Element Fluor ist.

17. Katalysator nach einem der Ansprüche 1 bis 16, der in Masseform vorliegt und der in Gew.-% im Verhältnis zur Gesamtmasse des Trägers des Katalysators einschließt:

- 0,01 bis 100 % wenigstens eines gemischten Sulfids

   wobei der Katalysator im übrigen einschließen kann

- 0 bis 99,99 % wenigstens eines Metalls der Gruppe VIII

- 0 bis 20% wenigstens eines Elements, das aus der Gruppe gewählt ist, die gebildet wird durch die Elemente Si, P und B und

- 0 bis 15% wenigstens eines Elements, das aus der Gruppe VIIA gewählt ist.

18. Katalysator nach einem der Ansprüche 1 bis 16, der mit Träger vorliegt und der in Gew.-% im Verhältnis zur Gesamtmasse des Trägers des Katalysators einschließt:

- 0,1 bis 99,5 % wenigstens eines gemischten Sulfids

- 0,5 bis 99,99 % wenigstens eines Trägers,

   wobei der Katalysator im übrigen einschließen kann

- 0 bis 30% wenigstens eines Metalls der Gruppe VIII

- 0 bis 20% wenigstens eines Elements, das aus der Gruppe gewählt ist, die gebildet wird durch die Elemente Si, P und B und

- 0 bis 15% wenigstens eines Elements, das aus der Gruppe VIIA gewählt ist.

19. Katalysator nach einem der Ansprüche 1 bis 16, der mit Träger vorliegt und der in Gew.-% im Verhältnis zur Gesamtmasse des Trägers des Katalysators einschließt:

- 1 bis 99,9 % wenigstens einer Matrix

- 0,1 bis 99 % wenigstens einer gemischten Sulfidphase von wenigstens einem Metall der Gruppe VB und von wenigstens einem Metall der Gruppe VIB,

- wobei der Katalysator im übrigen einschließen kann:

- 0 bis 30% wenigstens eines Metalls der Gruppe VIII

- 0 bis 20% wenigstens eines Elements, das aus der Gruppe gewählt ist, die gebildet wird durch die Elemente Si, P und B und

- 0 bis 15% wenigstens eines Elements, das aus der Gruppe VIIA gewählt ist.

20. Verfahren zur Herstellung des gemischten, in einem Katalysator nach einem der Ansprüche 1 bis 19 enthaltenen Sulfids, das die folgenden Stufen umfasst:

a) man bildet eine Reaktionsmischung, die wenigstens die folgenden Verbindungen einschließt: wenigstens eine Quelle eines Elements der Gruppe VB, wenigstens eine Quelle eines Elements der Gruppe VIB, gegebenenfalls Wasser, gegebenenfalls wenigstens ein Element, das aus der Gruppe gewählt ist, die gebildet wird durch die Elemente der Gruppe VIII, gegebenenfalls wenigstens eine Quelle eines Elements, das aus der Gruppe gewählt ist, die gebildet wird durch die Elemente: P, B und Si, gegebenenfalls wenigstens eine Quelle eines Elements, das unter den Elementen der Gruppe VIIA gewählt ist,

b) man hält diese Mischung bei einer Heiztemperatur über etwa 40°C bei einem Druck von wenigstens gleich dem Atmosphärendruck und in Gegenwart einer Schwefelverbindung bis man das gemischte Sulfid erhält.

21. Verfahren nach Anspruch 20 derart, dass man zur Schwefelung des Gemischs bei einer Temperatur zwischen 40 und 700°C unter autogenem Druck und in Gegenwart einer gasförmigen schwefelhaltigen Verbindung übergeht.

22. Verfahren nach Anspruch 20 derart, dass die gasförmige schwefelhaltige Verbindung $CS_2$ ist.

23. Verfahren zur Herstellung des gemischten Sulfids nach einem der Ansprüche 20 oder 22, bei dem das Element der Gruppe VB Niob ist und das Element der Gruppe VIB Molybdän ist, welche in dem Katalysator ausgehend von einem Oxid der Formel $Nb_2Mo_3O_{14}$ enthalten sind.

24. Verfahren nach Anspruch 23 derart, dass man zu einer Schwefelung unter einem Strom einer Wasserstoff/Schwefelwasserstoff-Mischung oder Stickstoff/Schwefelwasserstoff-Mischung bei einer Temperatur zwischen 150 und 800°C und einer Reaktionszone mit durchquertem Bett übergeht.

25. Verfahren zur Herstellung eines gemischten Sulfids mit Träger, das darin besteht, eine Zusammensetzung herzustellen, die einen Träger und das gemischte Sulfid umfasst, das nach einem der Ansprüche 22 bis 24 hergestellt ist.

26. Verfahren zur Herstellung eines gemischten Sulfids nach Anspruch 20, bei dem das bei Stufe a gebildete Reaktionsgemisch im übrigen wenigstens einen Träger umfasst, der in der durch die Matrices gebildeten Gruppe gewählt ist und die Stufe b den Erhalt eines Feststoffs ermöglicht, der wenigstens den Träger und das gemischte Sulfid umfasst.

27. Verfahren nach Anspruch 23 derart, dass die Stufe a eine Imprägnierungsstufe des Trägers ist.

28. Verwendung des Katalysators nach einem der Ansprüche 1 bis 19 zur Hydrierraffinierung oder zum Hydriercracken von kohlenwasserstoffhaltigen Chargen bei einer Temperatur über 200°C, einem Druck über 0,1 MPa, in Gegenwart von Wasserstoff mit einem Rezyklierungsgrad von wenigstens 80 Litern Wasserstoff pro Liter Charge und einer stündlichen Volumengeschwindigkeit zwischen 0,1 und 20 $h^{-1}$.

29. Verwendung nach Anspruch 28 derart, dass die Charge aus der Gruppe gewählt ist, die gebildet wird durch die Benzine, die Gasöle, die Gasöle unter Vakuum, die deasphaltierten oder nicht deasphaltierten Rückstände, die paraffinischen Öle, die Wachse und Paraffine und Heteroatome wie Schwefel, Sauerstoff und Stickstoff und wenigstens ein Metall enthalten kann.

**Claims**

1. A catalyst comprising at least one mixed sulphide comprising sulphur, at least one element from group VB of the periodic table such as tantalum, niobium or vanadium, and at least one element from group VIB of said periodic table, such as chromium, molybdenum or tungsten.

2. A catalyst according to claim 1, in which the group VB element is niobium.

3. A catalyst according to claim 1 or claim 2, in which the group VIB element is molybdenum or tungsten.

4. A catalyst according to any one of claims 1 to 3, in which the group VIB element is molybdenum.

5. A catalyst according to any one of claims 1 to 4, comprising a mixed sulphide of niobium and molybdenum.

6. A catalyst according to any one of claims 1 to 5, comprising a mixed sulphide with the following approximate general formula:

$$A_xB_{1-x}S_y$$

where:

x is a number in the range 0.001 to 0.999;
y is a number in the range 0.1 to 8;
A is a group VB element;
B is an element selected from group VIB.

7. A catalyst according to any one of claims 1 to 5, comprising a mixed sulphide with the following approximate general formula:

$$A_xB_{1-x}S_y$$

where:

x is a number in the range 0.05 to 0.95;
y is a number in the range 0.5 to 4;
A is a group VB element;
B is an element selected from group VIB.

8. A catalyst according to any one of claims 1 to 6, comprising at least one element from group VIII of the periodic table.

9. A catalyst according to claim 8, in which the group VIII metal is selected in the group consisting of iron, cobalt and nickel.

10. A catalyst according to any one of claims 1 to 8, comprising a support.

11. A catalyst according to claim 9, in which said support is a matrix.

12. A catalyst according to claim 10, in which said matrix is alumina.

13. A catalyst according to any one of claims 1 to 12, in which said mixed sulphide has been intercalated with lithium then de-intercalated.

14. A catalyst according to any one of claims 1 to 13, comprising at least one element selected in the group consisting of phosphorous, boron and silicon.

15. A catalyst according to any one of claims 1 to 14, comprising at least one group VIIA element.

**16.** A catalyst according to claim 15, in which said element is fluorine.

**17.** A catalyst according to any one of claims 1 to 16, in a massive form which includes, in % by weight with respect to the total catalyst mass:

- 0.01% to 100% of at least one mixed sulphide;

the catalyst possibly further containing:

- 0 to 99.99% of at least one group VIII metal;
- 0 to 20% of at least one element selected in the group consisting of elements Si, P and B; and
- 0 to 15% of at least one element selected from group VIIA.

**18.** A catalyst according to any one of claims 1 to 16, which is supported and which includes, in % by weight with respect to the total catalyst mass:

- 0.5% to 99.5% of at least one mixed sulphide;
- 0.5% to 99.5% of at least one support;

the catalyst possibly further containing:

- 0 to 30% of at least one group VIII metal;
- 0 to 20% of at least one element selected in the group consisting of the elements Si, P and B; and
- 0 to 15% of at least one element selected from group VIIA.

**19.** A catalyst according to any one of claims 1 to 16 which is supported and which includes, in % by weight with respect to the total catalyst mass:

- 1% to 99.9% of at least one matrix;
- 0.1% to 99% of at least one mixed sulphide of a group VB element and a group VIB element;

the catalyst possibly further containing:

- 0 to 30% of at least one group VIII metal;
- 0 to 20% of at least one element selected in the group consisting of the elements Si, P and B; and
- 0 to 15% of at least one element selected from group VIIA.

**20.** A process for the preparation of a mixed sulphide comprised in a catalyst according to any one of claims 1 to 19, the process comprising the following steps:

a) forming a reaction mixture which comprises at least the following compounds: at least one source of a group VB element, at least one source of a group VIB element, optionally water, optionally at least one element selected in the group consisting of group VIII elements, optionally at least one source of an element selected in the group consisting of the elements: P, B and Si, and optionally at least one element selected from group VIIA elements;
b) maintaining the mixture at a heating temperature which is over about 40°C, at a pressure which is at least equal to atmospheric pressure and in the presence of a sulphur compound until the mixed sulphide is obtained.

**21.** A process according to claim 20, in which the mixture is sulphurated at a temperature which is in the range 40°C to 700°C, under autogenous pressure and in the presence of a gaseous sulphur compound.

**22.** A process according to claim 21 in which said gaseous compound is $CS_2$.

**23.** A process for the synthesis of a mixed sulphide in which the group VB element is niobium and the group VIB element is molybdenum, comprised in a catalyst according to any one of claims 1 to 18 from an oxide with formula $Nb_2Mo_3O_{14}$.

**24.** A process according to claim 23, in which sulphuration is carried out in a stream of a hydrogen/hydrogen sulphide or nitrogen/hydrogen sulphide mixture at a temperature which is in the range 150°C to 800°C, in a traversed bed reaction zone.

25. A process for preparing a supported mixed sulphide consisting in preparing a composition comprising the support and the mixed sulphide is synthesised according to any one of claims 22 to 24.

26. A process for preparing a mixed sulfide according to claim 20 wherein the reaction mixture formed at step a further contains at least one support selected in the groups consisting of matrices and step b allows to obtain a solid containing at least the support and the mixed sulfide.

27. A process according to claim 26, in which step a) is a support impregnation step.

28. Use of a catalyst according to any one of claims 1 to 19 for hydrorefining or hydrocracking hydrocarbon feeds, at a temperature of more than 200°C, a pressure of more than 0.1 MPa, in the presence of hydrogen with a recycle ratio of at least 80 litres of hydrogen per litre of feed and at an hourly space velocity which is in the range 0.1 to 20 $h^{-1}$.

29. Use according to claim 29, in which the feed is selected in the group consisting of gasolines, gas oils, vacuum gas oils, residues which may or may not be deasphalted, paraffin oils, waxes and paraffins and it may contain heteroatoms such as sulphur, oxygen and nitrogen and at least one metal.